(19) Europäisches Patentamt
European Patent Office
Office européen des brevets

(11) **EP 1 959 250 A1**

(12) **EUROPEAN PATENT APPLICATION**
published in accordance with Art. 158(3) EPC

(43) Date of publication:
**20.08.2008 Bulletin 2008/34**

(51) Int Cl.:
**G01N 21/35** (2006.01)

(21) Application number: **07707103.3**

(22) Date of filing: **19.01.2007**

(86) International application number:
**PCT/JP2007/050815**

(87) International publication number:
**WO 2007/083755 (26.07.2007 Gazette 2007/30)**

(84) Designated Contracting States:
**DE FR GB**

(30) Priority: **20.01.2006 JP 2006013103**

(71) Applicant: **Sumitomo Electric Industries, Ltd.**
**Osaka-shi, Osaka 541-0041 (JP)**

(72) Inventors:
• **SASAKI, Takashi**
**Yokohama-shi, Kanagawa 244-8588 (JP)**
• **MAKIHARA, Kazumasa**
**Yokohama-shi, Kanagawa 244-8588 (JP)**

• **OKUNO, Toshiaki**
**Yokohama-shi, Kanagawa 244-8588 (JP)**
• **ONISHI, Masashi**
**Yokohama-shi, Kanagawa 244-8588 (JP)**
• **HIRANO, Masaaki**
**Yokohama-shi, Kanagawa 244-8588 (JP)**
• **NAKANISHI, Tetsuya**
**Yokohama-shi, Kanagawa 244-8588 (JP)**

(74) Representative: **HOFFMANN EITLE**
**Patent- und Rechtsanwälte**
**Arabellastrasse 4**
**81925 München (DE)**

(54) **ANALYZER, AUTHENTICITY JUDGING DEVICE, AUTHENTICITY JUDGING METHOD, AND UNDERGROUND SEARCHING METHOD**

(57) The present invention relates to an analyzing apparatus and the like having a structure for enabling spectrometry and the like up to a longer frequency region while being excellent in practicality. The analyzing apparatus comprises a light source section and a light-detecting section. The light source section includes a seed light source emitting laser light, and a solid highly nonlinear optical fiber generating SC light in response to the input of the laser light, and thereby emitting the SC light as irradiation light to an object. The light-detecting section detects light to be detected from the object irradiated with the irradiation light. Here, the seed light source in the light source section emits pulsed light having a center wavelength within the range of 1.3 μm to 1.8 μm.

*Fig.1*

EP 1 959 250 A1

## Description

## Technical Field

The present invention relates to an analyzing apparatus, an apparatus for determining the authenticity of printed matters, a method of determining the authenticity of printed matters, and an underground searching method which utilize supercontinuum light (SC light).

## Background Art

Supercontinuum light (SC light) is wideband light whose spectrum band is widened by a nonlinear phenomenon occurring in a nonlinear medium on which laser light having a strong peak power is incident. SC light sources, which are one of light sources generating wideband light having a spectrum bandwidth ranging from about 0.1 $\mu$m to about 2 $\mu$m, have been expected to become an important light source in various application fields because of their high output characteristic, wideband characteristic, and spectral flatness. Various configurations have been proposed as such SC light sources, among which those generating the SC light within optical fibers have widely been in use in general, since they are simple, their interaction length is easily to elongate, and their spectrum can be controlled easily.

For example. Patent Document 1 discloses an SC light source using a photonic crystal fiber (PCF) and a spectrometer employing the SC light source. The PCF is an optical fiber whose nonlinearity and dispersion characteristic can be designed freely to a certain extent by forming a void in a cladding, so that a high nonlinearity is realized by reducing the effective area, for example.

Patent Document 1: Japanese Patent Application Laid-Open No. 2003-279412
Patent Document 2: Japanese Patent Application Laid-Open No. 2005-312743
Patent Document 3: Japanese Patent Application Laid-Open No. HEI 5-266318
Patent Document 4: Japanese-translated PCT Patent Application Laid-Open No. 2001-518208
Nonpatent Document 1: Ochiai, "Near-Infrared Chemical Imaging: Technology and Applications", Journal of the Spectroscopical Society of Japan, vol. 53, no. 6, p. 377, 2004
Nonpatent Document 2: Iwata, "Femtosecond Time-Resolved Near-Infrared Spectroscopy and 'Loosely Bound Electrons'", Journal of the Spectroscopical Society of Japan, vol. 54, no. 3, p. 153, 2005

## Disclosure of the Invention

## Problems that the Invention is to Solve

The present inventors have examined conventional spectrometers, and as a result, have discovered the following problems.

In general, the zero-dispersion wavelength of PCF generating a nonlinear phenomenon is short as 0.8 $\mu$m at most. Therefore, the wavelength of laser light made incident on the PCF in order to generate SC light is also limited to 0.8 $\mu$m and its vicinity, so that the SC light generated by the PCF is restricted to a relatively short wavelength region, e.g., 0.4 $\mu$m to 1.75 $\mu$m (see Patent Document 1). However, there are cases making it necessary to determine a substance having an absorption wavelength longer than 1.75 $\mu$m or the like in infrared spectrometry and the like. In such cases, the SC light sources using PCF are not suitable, whereby those which can realize a spectrum extending to a longer wavelength region are desired.

On the other hand, the PCF has a void, so that its cross-sectional structure is complicated, whereby fibers are not easily spliced to each other. Namely, when splicing the PCF to another optical fiber, optical loss tends to become greater at their interface. Further, the PCF has a fear of its end face being damaged (molten) by the energy of light exiting therefrom. Therefore, strong pumping light cannot be introduced to SC light sources employing the PCF, which makes it difficult to generate strong SC light. The PCF thus leaves various problems and lacks practicality as the SC light source at present.

The present invention has been developed to eliminate the problems described above. It is an object of the present invention to provide an analyzing apparatus having a structure for enabling infrared spectrometry up to a longer wavelength region and also provide an apparatus for determining the authenticity of printed matters, a method of determining the authenticity of printed matters, and an underground searching method which employ this analyzing apparatus.

## Means for Solving the Problems

For solving the above-mentioned problems, the analyzing apparatus according to the present invention comprises, at least, a light source section and a light-detecting section. The light source section is a light-emitting unit which emits supercontinuum light (SC light) having expanded a spectrum band as irradiation light emitted to a predetermined object, and includes a seed light source and a solid optical fiber. The seed light source emits laser light. The solid optical fiber inputs the laser light and generates the SC light. In particular, the laser light emitted from the seed light source in the analyzing apparatus according to the present invention has a center wavelength within the range of 1.3 $\mu$m or more but 1.8 $\mu$m or less.

In the analyzing apparatus having a structure such as the one mentioned above, laser light is made incident on a solid optical fiber instead of the PCF having a void, whereby an SC light pulse including the SC light is generated within the solid optical fiber. Preferred as such a solid optical fiber is a so-called hole-unassisted type (i.e., solid) highly nonlinear optical fiber (HNLF: Highly Nonlinear Fiber). The HNLF is an optical fiber whose nonlinear coefficient $\gamma$ is 5 times or more than that of a typical transmission optical fiber, so that a nonlinear phenomenon is easy to occur. In the case of measurement of XPM method, for example, the nonlinear coefficient $\gamma$ of HNLF is desirably 7.5 (/W/km) or more. It is more desirably 10 times or more (15 (/W/km) or more), particularly 20 times or more (30 (/W/km) or more), than that of the typical transmission optical fiber. It will be desirable that such an optical fiber is designed such that a zero-dispersion wavelength where a four-wave mixing phenomenon or soliton effect contributing to generating **SC** light is likely to occur is 1.3 $\mu$m or more but 1.8 $\mu$m or less. The HNLF is easy to design such that the zero-dispersion wavelength is 1.3 $\mu$m or more but 1.8 $\mu$m or less, whereby the center wavelength of the laser light from the seed light source is also set in this wavelength region. This structure favorably generates **SC** light having a wideband spectrum centered at the zero-dispersion wavelength region. Since the optical fiber employed in the light source section of the analyzing apparatus has no void, fibers can easily be spliced to each other. The optical loss at the interface between these fibers can specifically be reduced to 1 dB/splice or less, typically about 0.1 dB/splice or less, whereby strong SC light can be generated. The HNLF can reduce its PMD to 1.0 ps/km$^{1/2}$ or less (typically 0.1 ps/km$^{1/2}$ or less). Therefore, coupling is hard to occur between orthogonal polarization modes, whereby the SC light spectrum can be stabilized. The HNLF is also relatively easy to control its chromatic dispersion characteristic, and can realize desirable dispersion wavelength, dispersion value, dispersion slope, and fourth-order dispersion (wavelength derivative of the dispersion slope). Controllability is high in the process of manufacturing, whereas the transmission characteristic fluctuates little along the longitudinal direction of the optical fiber. Therefore, the analyzing apparatus according to the present invention is excellent in practicality and enables infrared spectrometry and the like up to a longer wavelength region.

In the case that a plurality of wavelengths of light different from each other are needed in infrared spectrometry and the like, the apparatus itself will become bulky while light sources corresponding to the respective wavelengths are prepared. However, a structure such as that of the analyzing apparatus according to the present invention can reduce the size of the apparatus itself. Namely, since the light source section generates SC light having a wideband spectrum, a plurality of wavelength components can easily be generated from one small light source of the analyzing apparatus itself. In the analyzing apparatus according to the present invention, the light source section may have a plurality of exit ends for emitting the SC light. Such a structure is effective in particular when performing spectrometry at a wavelength where signal to noise is low (e.g., near 2500 nm) or when the quantity of irradiation light is insufficient because the illumination area is too large.

It will be desirable that the laser light emitted from the seed light source is pulsed. This is because the optical intensity (peak intensity of a pulse) can be made higher, so that SC light having a spectrum with a wider band can be generated with a lower average power. It will be preferred that the repetition frequency of a pulse light source is slower, e.g., 50 GHz or lower, preferably 100 MHz or lower, since the peak intensity can be made higher. When the laser light emitted from the seed light source is pulsed, each spectral component of the emitted SC light is also pulsed.

Preferably, in the analyzing apparatus according to the present invention, the spectrum band of the SC light is 0.8 $\mu$m or more but 3 $\mu$m or less. As mentioned above, this analyzing apparatus employs a solid optical fiber (e.g., HNLF) and thus can favorably generate SC light having such a relatively longer wavelength region. In this specification, "range of 0.8 $\mu$m or more but 3 $\mu$m or less" means that the spectral intensity of SC light at each of the wavelengths of 0.8 $\mu$m and 3 $\mu$m is 10% or less of the peak intensity, for example.

The analyzing apparatus according to the present invention may further comprise an irradiation diameter restricting part for restricting an irradiation diameter of irradiation light emitted from the light source section such the irradiation light becomes a spot having an irradiation diameter of 1 $\mu$m or more but 50 mm or less on a surface of the object. This case can further enhance the optical intensity (illuminance) per unit area of the irradiation light. In this specification, "irradiation diameter" refers to the largest diameter within a range where the illuminance is 10% or more of the maximum illuminance on the surface of the object.

Preferably, in the analyzing apparatus according to the present invention, the SC light emitted from the light source section has an intensity of 0.1 $\mu$W/nm or more. This analyzing apparatus employs the solid optical fiber (e.g., HNLF), and thus can favorably generate such SC light with relatively high output power. Namely, this analyzing apparatus can accurately perform infrared spectrometry and the like. In this specification, "intensity of SC light" refers to the time-averaged intensity in a spectral component of SC light having a wavelength width of 1 nm, for example.

Preferably, in the analyzing apparatus according to the present invention, the intensity of SC light has a temporal fluctuation width within ±5% per hour. The solid optical fiber (e.g., HNLF) has a lower polarization dependency than that of PCF. Therefore, the optical intensity of SC light generated becomes stable regardless of the state of the polarization of input laser light, whereby this analyzing apparatus can favorably realize such a small intensity fluctuation width of SC light. The analyzing apparatus according to the present invention may further comprise a polarizing plate, optically connected to the optical fiber, for changing a plane of polarization of irradiation light. Even when the absorptance (or reflectance, light-emitting intensity, or the like) of a substance to be measured greatly depends on the polarization of irradiation light, the contrast of information concerning the substance to be measured included in light to be detected can be enhanced by the polarizing plate changing the plane of polarization of irradiation light. In the analyzing apparatus according to the present invention, the light source section may further include optical amplification means for amplifying the SC light by utilizing pumping light having a wavelength different from that of the laser light. In this case, irradiation light having a given optical intensity can easily be generated. Examples of such optical amplification means include optical parametric amplifier (OPA) and Raman amplifier. The solid optical fiber in this analyzing apparatus may also act as an optical amplification fiber such as OPA or Raman amplifier. Optical amplifiers using rare-earth-doped fibers such as Er-doped fibers, Y-doped fibers, Bi-doped fibers, and Tm-doped fibers are also employable.

Preferably, in the analyzing apparatus according to the present invention, the light-detecting section has a light-receiving device including an InP semiconductor layer and an InGaAs semiconductor layer. In particular, the light-receiving device has a structure in which an InGaAs photosensitive layer is provided on an InP substrate. In this case, near-infrared light (light to be detected) having a wide band centered at a wavelength region of 1.3 $\mu$m or more but 1.8 $\mu$m or less can favorably be detected. As a photosensitive layer material in the light-receiving device, any of Si, PbSe, InAs, PbS, and HgCdTe may be selected depending on the detection wavelength. The substrate material is not limited to InP.

The analyzing apparatus according to the present invention may further comprise an optical filter which limits a wavelength of irradiation light irradiating the object or light to be detected reaching the light-detecting section to a predetermined range. While the intensity of each wavelength component can be seen by dividing the light to be detected with a spectroscope, the analysis can be conducted easily by limiting the wavelength range of irradiation light or light to be detected with an optical filter as in this analyzing apparatus without using an expensive spectroscope when the absorption wavelength of the substance to be measured or the like is known beforehand. The analyzing apparatus according to the present invention may further comprise a tunable filter which limits the wavelength range of irradiation light irradiating the object or light to be detected reaching the light-detecting section. In this case, a plurality of substances to be measured whose absorption wavelengths and the like differ from each other can easily be analyzed without exchanging filters. Also, the detection wavelength can easily be adjusted according to the absorption wavelengths of substances to be measured and the like.

Optical filters and tunable filters such as those mentioned above may be any of filters which transmit only monochromes therethrough and filters which can transmit therethrough a plurality of wavelength components. Known as an example of filters which can transmit a plurality of wavelength components therethrough is a mosaic color filter in which filter devices transmitting respective specific wavelength components (colors) therethrough are arranged two-dimensionally, which enables an analysis with a favorable SN ratio by transmitting therethrough only preset wavelength components (colors).

Preferably, in the analyzing apparatus according to the present invention, the irradiation light has such a spectral waveform as to compensate for a wavelength dependency of a light-receiving sensitivity of the light-detecting section. Namely, when the optical intensity of irradiation light is made stronger and weaker in respective wavelength regions where the sensitivity of the light-detecting section is lower and higher, a uniform detection result can be obtained over a wide band regardless of the wavelength dependency of the light-detecting section.

Preferably, the analyzing apparatus according to the present invention further comprises a signal processing section which generates, according to a result of detection in the light-detecting section, at least one of spectral waveform information and temporal waveform information concerning the light to be detected as imaging data including the object in an illumination area where the irradiation light reaches. Infrared spectrometry and the like can easily be performed in this case. The signal processing section may carry out various kinds of signal processing such as SN ratio improvement, visualization, and vibration correction in the imaging data.

In particular, for improving the SN ratio of the imaging data generated according to the light to be detected, the signal processing section produces corrected imaging data (analysis image) having reduced a noise component from thus generated imaging data. Usually, in an environment where the analyzing apparatus is placed, the SN ratio of the resulting imaging data is deteriorated by stray light (e.g., sunlight, streetlight, and the like), ambient temperature, and surrounding environments (e.g., rain, fog, snow, and the like). Therefore, for example, the SN ratio can be improved by utilizing a light-shielded image (including the device noise of the light-receiving device itself) obtained in the state where the light-receiving surface of the light-receiving device is shielded, an SC light image obtained by directly receiving the SC light by the light-receiving device, a nonirradiated image obtained in the state not irradiated with the SC light, and an illumination image (imaging data based on information about the light to be detected) obtained in the state irradiated with the SC light. By subtraction processing of these four kinds of images, the amount of absorption at a specific wavelength in the object to be detected (including the optical intensity information of the light to be detected in the absorption wavelength region of the object) can clearly be visualized in the state where influences of disturbances such as stray light, ambient temperature, and surrounding environment are eliminated.

As color imaging of the information about the light to be detected, the signal processing section can turn (visualize) imaging data based on information about the light to be detected into a color image. For example, the signal processing section allocates respective colors in the visible light region to one or more wavelength components included in the light to be detected with respect to pixels constituting the imaging data corresponding to illumination locations within an illumination area irradiated with the SC light, and causes a predetermined display apparatus to show the pixels constituting the imaging data with the respective allocated colors. The allocated colors in the visible light region may be red, yellow, blue, and the like or expressed by density levels (grayscales) in a monochromatic image. The display part displays the imaging data in the colors allocated by the signal processing section to the pixels constituting the imaging data, whereby the imaging data based on the information about the light to be detected can be visualized.

As another way of color imaging, the signal processing section may divide the wavelength range of the light to be detected into a plurality of wavelength regions with respect to pixels constituting the imaging data corresponding to illumination locations within the illumination area, allocate respective colors in the visible light region to the divided plurality of wavelength regions, and cause a predetermined display apparatus to show the pixels constituting the imaging data with the respective allocated colors. The allocated colors in the visible light region may also be red, yellow, blue, and the like or expressed by density levels (grayscales) in a monochromatic image in this case. The display part displays the imaging data in the colors allocated by the signal processing section to the pixels constituting the imaging data, whereby the imaging data based on the information about the light to be detected can be visualized.

The signal processing section may successively carry out a first step of determining a wavelength of exit light, and a second step of irradiating the object with irradiation light having the wavelength determined by the first step and obtaining a result of detection of a reflected component of the irradiation light. The first step, which is a step carried out prior to irradiating the object with the irradiation light, irradiates the object with probe light having a wavelength region of 800 nm to 3000 nm, and determines the wavelength of the irradiation light emitted from the light source section according to a result of detection of a reflected component of the probe light. Determining an inspection wavelength of the object beforehand makes it possible to narrow the SC light band and arrange a filter for selectively eliminating unnecessary wavelength components on the light source section side or light-detecting section side. This structure enables spectrometry with a favorable SN ratio.

Further, the signal processing section averages pixels corresponding to a plurality of imaging data items successively generated as time passes, thereby newly producing an analysis image. In particular, the averaging is realized by providing an average value of luminance of the corresponding pixels as new luminance information. In this case, influences of image blurs such as vibration can effectively be reduced.

The authenticity determining apparatus according to the present invention has a first structure for determining the authenticity of a printed matter having a pattern printed with a plurality of kinds of inks having optical characteristics different from each other in terms of at least one of absorption wavelength, reflection wavelength, and fluorescence wavelength. Namely, this is the authenticity determining apparatus having the first structure, and comprises, at least, a light source section and a light-detecting apparatus. The light source section is a light source which emits SC light having expanded a spectrum band as illumination light emitted to a predetermined object, and includes a seed light source and a solid optical fiber. The seed light source emits laser light. The solid optical fiber inputs the laser light and generates the SC light. The light-detecting section detects light to be detected from the printed matter irradiated with the irradiation light. In particular, the laser light emitted from the seed light source in the authenticity determining apparatus having the first structure has a center wavelength within the range of 1.3 $\mu$m or more but 1.8 $\mu$m or less.

The printed matter having a pattern (including letters and symbols) printed with a plurality of inks is irradiated with light including the absorption wavelength, reflection wavelength, and fluorescence wavelength of each ink. By displaying the whole pattern, whether the printed matter is authentic or not can be determined. When determining whether the printed matter is authentic or not, this authenticity determining apparatus can display the above-mentioned pattern over a wide frequency region without necessitating the use of PCF, and thus is excellent in practicality and makes it possible to determine the authenticity with a high accuracy.

The authenticity determining apparatus having the first structure such as the one mentioned above may further comprise an optical filter optically connected to an optical fiber. The optical filter attenuates or blocks a wavelength component of SC light corresponding to one or more wavelengths in the absorption wavelength, reflection wavelength, and fluorescence wavelength of each of the plurality of kinds of inks. When determining the authenticity of the printed matter, light corresponding to the absorption wavelength, reflection wavelength, or fluorescence wavelength of a specific ink in the plurality of kinds of inks, for example, is attenuated or blocked. This can hide the specific pattern alone, and whether the printed matter is authentic or not can also be determined. In this case, providing an optical filter such as the one mentioned above makes it easier to hide the specific pattern.

The authenticity determining apparatus may have a second structure for determining the authenticity of a printed matter coated with a plurality of kinds of inks different from each other in terms of fluorescence wavelength and fluorescence life. Namely, the authenticity determining apparatus having the second structure comprises, at least, a light source section and a light-detecting section. The light source section is a light-emitting unit which emits SC light having expanded a spectrum band as illumination light emitted to the printed matter, and includes a seed light source and a solid optical fiber. The seed light source emits laser light. The laser light is inserted into the solid optical fiber and generates the SC light. The light-detecting section detects a fluorescence from the printed matter generated when the plurality of kinds of inkings are pumped by the irradiation light. In particular, the laser light emitted from the seed light source in the analyzing apparatus according to the present invention has a center wavelength within the range of 1.3 $\mu$m or more but 1.8 $\mu$m or less. In addition, in synchronization with a fluorescence of irradiation light from the light source section, the light-detecting section detects light emitted from the printed matter.

In the case of determining the authenticity of the printed matter coated with a plurality of kinds of inks different from each other in terms of fluorescence wavelength and fluorescence life, the plurality of kinds of inks can be pumped/caused to emit light at the same time when such a printed matter is irradiated with a wideband SC light pulse. When the emitted light caused by the pumping is detected in the light-detecting section in synchronization with a fluorescence of the irradiation light, a time-resolved fluorescence intensity can be obtained. In this case, changes caused by the plurality of inks having fluorescence lives different from each other in the fluorescence intensity corresponding to the lapse of time or in the wavelength spectrum distribution of fluorescence intensity can be observed. Namely, the kinds of inks in use can accurately be identified, whereby whether the printed matter is authentic or not can accurately be determined. Further, when the printed matter is coated beforehand with a plurality of kinds of inks causing a fluorescence such as fluorescence, it becomes necessary for counterfeiters to match not only colors and printing forms but also all the inks to genuine ones, whereby the counterfeiting of the printed matter can be made drastically difficult. The authenticity determining apparatus having the second structure is excellent in practicality and enables determination in a longer wavelength region, since the solid optical fiber generates an SC light pulse. In this specification, "fluorescence" refers to light (e.g., fluorescence, phosphorescence, and the like) generated by the ink itself.

The authenticity determining method according to the present invention comprises an irradiation step, a detection step, and a determination step. The irradiation step makes laser light incident on a solid optical fiber, so as to generate SC light within the solid optical fiber, and irradiates a printed matter with the SC light as irradiation light. The detection step detects light to be detected from the printed matter irradiated with the irradiation light. The determination step uses one of wavelength components included in the light to be detected as a determination reference wavelength, and determines whether the printed matter is authentic or not according to an optical intensity of the determination reference wavelength. In particular, the determination step in the authenticity determining method according to the present invention divides a region where the authenticity of the printed matter is determined into a plurality of areas beforehand, and allocates determination reference wavelengths different from each other to thus divided areas, respectively.

As explained in the foregoing, the accuracy in detecting a counterfeit can be improved as the number of kinds of inks causing different kinds of fluorescences (fluorescence and the like) and intensities used for printing is increased. On the other hand, the number of wavelength bands to be detected increases, thereby complicating the filter structure for passing or blocking predetermined wavelengths. Namely, for accurate detection, it becomes necessary to increase the number of filters or prepare a single filter for passing given wavelength bands therethrough. There is a fear of complicating the internal structure of the filter in this case. However, it is not always necessary for a single determining apparatus to analyze information (fluorescence, absorption, and the like) of all the inks, so that a plurality of determining apparatus may be provided with respective filters which pass or absorb different wavelengths and used for analyzing information of the printed matter, whereby the structure of each determining apparatus can be simplified, so as to cut its cost. In accordance with the authenticity determining method, even when a printed matter counterfeited in a certain area (country or region) is circulated, and its intensity of a light component to be detected at a predetermined wavelength allocated to this area happens to coincide with a standard, the possibility of its intensity of a light component to be detected at another predetermined wavelength allocated to a different area coinciding with the standard becomes very low. Namely, the counterfeit can be detected in the different area. Therefore, the authenticity determining method can raise the probability of detecting a counterfeit printed matter by a determining apparatus having a simple structure. Also, since the solid optical fiber such as HNLF generates an SC light pulse, the authenticity determining apparatus is excellent in practicality and enables determination by using a wavelength region wider than that of SC light caused by the PCF. In this specification, "intensity of a component at a predetermined wavelength" encompasses both of the magnitude of the component intensity at the predetermined wavelength and temporal change (response) of the component intensity.

The underground searching method according to the present invention is a method of searching for a specific substance underground, and comprises a drilling step, an irradiation step, a detection step, and a determination step. The drilling step drills into the ground of an object area. The irradiation step makes laser light incident on a solid optical fiber, so as to generate SC light within the solid optical fiber, and emits the SC light as irradiation light to a predetermined location within the drilled area. The detection step detects light to be detected from the predetermined location irradiated with the irradiation light. The determination step determines whether a specific substance exists or not according to an intensity of a specific wavelength component included in the light to be detected.

Since the solid optical fiber generates the SC light, an underground searching method such as the one mentioned above is excellent in practicality, enables detection in a longer wavelength region, and can search for various kinds of substances.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

**Effects of the Invention**

The analyzing apparatus and the like according to the present invention are excellent in practicality, and enable detection up to a longer wavelength region.

**Brief Description of the Drawings**

Fig. 1 is a diagram showing the structure of a first embodiment of the analyzing apparatus according to the present invention;
Fig. 2 is a view showing various structural examples of the light source section in the analyzing apparatus according to the present invention;
Fig. 3 is a diagram showing the structure of a pulse light source as a first structure of the seed light source;
Fig. 4 is a diagram showing the structure of a pulse light source as a second structure of the seed light source;
Fig. 5 is a diagram showing the structure of a pulse light source as a third structure of the seed light source;
Fig. 6 is a graph showing examples of spectra of SC light pulses emitted from an optical fiber;
Fig. 7 is a graph showing examples of spectra of SC light pulses emitted from the optical fiber;

Fig. 8 is a table showing conditional examples of optical fibers and seed light sources for realizing the spectra shown in Figs. 6 and 7;
Fig. 9 is a table showing magnitudes of time-averaged optical intensity and average spectral component intensity (radiant flux per unit wavelength) in the whole spectrum of SC light obtained under the conditions shown in Fig. 8;
Fig. 10 is a diagram showing the structure of a second embodiment of the analyzing apparatus according to the present invention;
Fig. 11 is a chart showing an example of pulse form of irradiation light and an example of pulse form of light to be detected;
Fig. 12 is a diagram showing the structure of a third embodiment of the analyzing apparatus according to the present invention;
Fig. 13 is a diagram for explaining image processing (SN ratio improvement and vibration correction) in the signal processing section;
Fig. 14 is a diagram showing the structure of a fourth embodiment of the analyzing apparatus according to the present invention;
Fig. 15 is a diagram showing a modified example of the analyzing apparatus according to the fourth embodiment;
Fig. 16 is a (first) diagram for explaining a second authenticity determining method by the analyzing apparatus according to the fourth embodiment;
Fig. 17 is a (second) diagram for explaining the second authenticity determining method by the analyzing apparatus according to the fourth embodiment;
Fig. 18 is a (first) diagram for explaining color imaging in the analyzing apparatus according to the present invention;
Fig. 19 is a (second) diagram for explaining color imaging in the analyzing apparatus according to the present invention;
Fig. 20 is a view for explaining a third authenticity determining method by the analyzing apparatus according to the fourth embodiment; and
Fig. 21 is a diagram showing the structure of a fifth embodiment of the analyzing apparatus according to the present invention.

**Description of the Reference Numerals**

1, 1a-1f...analyzing apparatus; 2...seed light source; 2a-2c...pulse light source; 3, 3a-3f...light-detecting section; 4...control/analyzing part; 5...I/O part; 6a, 6b...monitor/analyzing part; 7...spectroscope; 8a...guide light source; 8b...optical coupler; 9...optical fiber; 11...half-wave plate; 12...polarizer; 13...tunable filter; 14, 19...lens; 14a...collimator lens; 14b...condenser lens; 15...half mirror; 16... optical filter; 17...pinhole plate; 20, 20a-20e...light source section; A1, A2...object; A3...printed matter; A4 ... concrete; L...light to be detected; Ld... minutely scattered light; Lg... guide light; P1...laser light;

P2...SC light; and P3...irradiation light.

**Best Modes for Carrying Out the Invention**

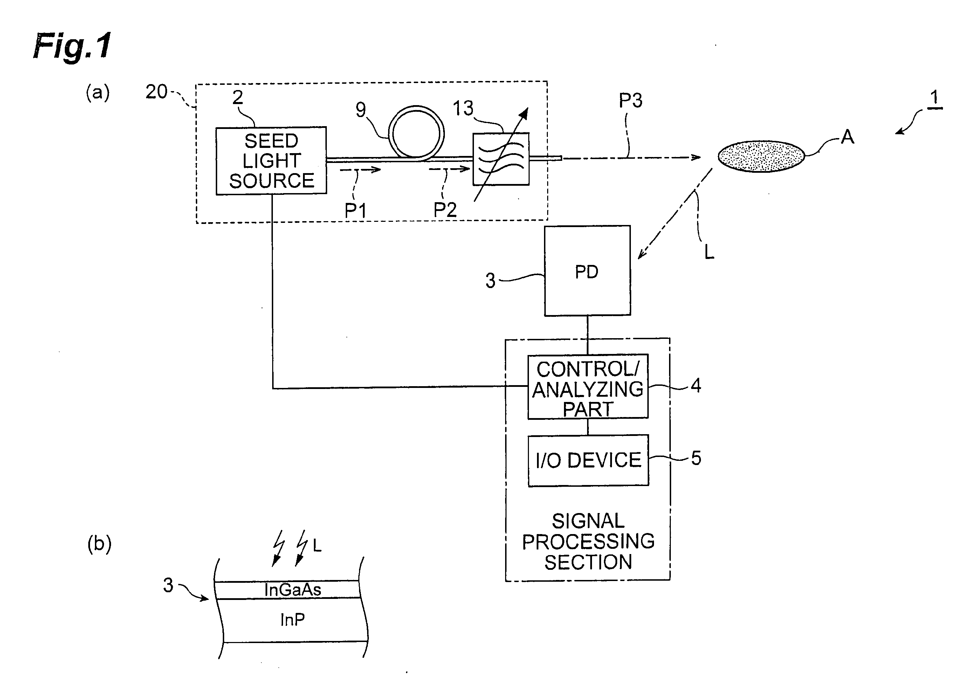

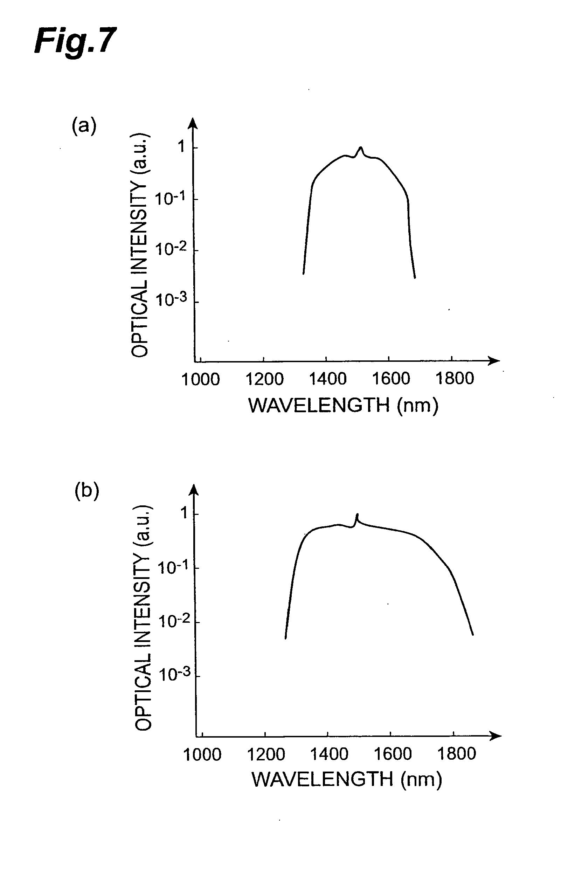

In the following, embodiments of the analyzing apparatus, authenticity determining apparatus, authenticity determining method, and underground searching method according to the present invention will be explained in detail with reference to Figs. 1 to 21. In the description of the drawings, identical or corresponding components are designated by the same reference numerals, and overlapping description is omitted.

(First Embodiment)

Fig. 1 is a diagram showing the structure of a first embodiment of the analyzing apparatus according to the present invention. The analyzing apparatus 1 shown in the area (a) of Fig. 1 is an apparatus which can specify various substances by infrared spectrometry and analyze states of distributions and particle sizes of object substances, and comprises a light-detecting section 3, a control/analyzing part 4, an I/O part 5, and a light source section 20. The control/analyzing part 4 and I/O part 5 construct a signal processing section.

The light source section 20 is a constituent for irradiating an object A with irradiation light P3 based on supercontinuum light (SC light) P2. The light source section 20 has a seed light source 2, an optical fiber 9 having an entrance end optically connected to the seed light source 2, and a tunable filter 13 connected in series to an exit end of the optical fiber 9.

The seed light source 2 receives power supplied from a power supply which is not depicted, and emits laser light P1. For example, the laser light P1 is continuous laser light or pulsed laser light having a very short time width of several nanoseconds or less. The internal structure of the seed light source 2 will be explained later in detail.

The optical fiber 9 is an optical fiber for inputting the laser light P1 and generating SC light P2. The optical fiber 9 is a so-called hole-unassisted type highly nonlinear optical fiber (HNLF) comprising a core for guiding light and a solid cladding having no void. The core part of the optical fiber 9 is formed with a region having a refractive index different from the substantial refractive index of the cladding, and the arrangement of this region is contrived, so as to enhance the nonlinearity. The optical fiber 9 expands the spectrum width owned by the laser light P1 twofold or more, for example, by a nonlinear optical effect (adiabatic soliton compression effect, Raman effect, self phase modulation, four-wave mixing, or the like), thereby generating the SC light Lb having a smooth spectral form over a wide band.

Unlike the PCF, the HNLF can easily be designed such that a zero-dispersion wavelength falls within the range of 1.3 $\mu$m or more but 1.8 $\mu$m or less. When the wavelength of the seed light source contributing to generating the SC light P2 is set near the zero-dispersion wavelength within this wavelength region, the SC light P2 becomes easier to occur. Namely, the SC light P2 can be generated on the longer wavelength side than in the case employing the PCF. Preferably, the center wavelength of the laser light P1 is near the zero-dispersion wavelength of the optical fiber 9 or longer. In particular, when the zero-dispersion wavelength of the optical fiber 9 is 1.3 $\mu$m or more but 1.8 $\mu$m or less, it will be preferred that the center wavelength of the laser light P1 is also 1.3 $\mu$m or more but 1.8 $\mu$m or less. This makes it possible to efficiently generate the SC light in a low-loss wavelength region of the optical fiber 9, while the SC light having a spectrum over the near-infrared region can favorably be generated.

The tunable filter 13 (optical filter) is an optical device for converting the SC light P2 to irradiation light P3, and may be a mosaic color filter. Namely, the SC light P2 emitted from the optical fiber 9 limits its wavelength range by the tunable filter 13, so as to become the irradiation light P3. The wavelength range of the tunable filter 13 is adjusted according to the reflection wavelength (or absorption wavelength, fluorescence wavelength, or the like) of a substance to be measured included in the object A. Such a tunable filter 13 is favorably realized by any of interference filters, diffraction gratings, and acousto-optical devices (AOTF: Acousto Optical Tunable Filters), for example.

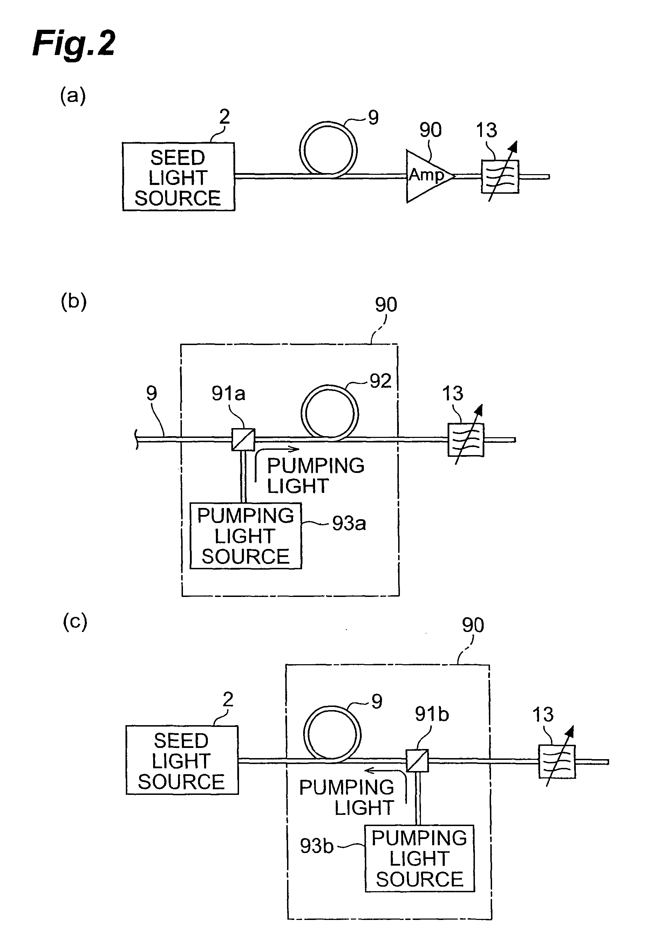

The light source section 20 may have optical amplification means which inputs pumping light having a wavelength different from that of laser light La and amplifies SC light Lb. Fig. 2 is a block diagram showing various structural examples of the light source section 20 in the infrared imaging system 1 shown in the area (a) of Fig. 1. It will be sufficient that the optical amplification means 90 (Amp) is arranged between the optical fiber 3 and wavelength selecting means 11 as shown in the area (a) of Fig. 2. Such optical amplification means 90 is realized by any of a structure (first structure) in which an amplification optical fiber 92 doped with a rare-earth element (Er, Y, Bi, Tm, or the like) is arranged behind the optical fiber 3, a structure (second structure) in which a Raman amplification optical fiber is arranged behind the optical fiber 3, a structure (third structure) in which the optical fiber 3 itself becomes a Raman amplification optical fiber (i.e., the optical fiber 3 also acts as optical amplification means), a structure (fourth structure) in which an optical fiber for optical parametric amplification (OPA) is optically coupled behind the optical fiber 3, and a structure (fifth structure) in which the optical fiber 3 itself becomes an OPA optical fiber (i.e., the optical fiber 3 also acts as optical amplification means). The optical connection or optical coupling between optical members is realized by any of fusion, connection by an optical connector, V-groove contact, or the like, and spatial coupling.

In the first structure, as shown in the area (b) in Fig. 2, a rare-earth-doped optical fiber is arranged as the amplification optical fiber 92 behind the optical fiber 3.

Pumping light from a pumping light source 93a is supplied to the upstream side (forward pumping) or downstream side (backward pumping) of the rare-earth-doped optical fiber through an optical coupler 91 a. This favorably amplifies the SC light Lb. In the first structure, the wavelength range of the spectrum of the SC light Lb is limited to the amplification band of the rare-earth-doped optical fiber.

The second structure is similar to the structure shown in the area (b) in Fig. 2. Namely, a Raman amplification optical fiber (an HNLF different from the optical fiber 3 or the like) is arranged as the amplification optical fiber 92 behind the optical fiber 3. Pumping light from the pumping light source 93a is supplied to the upstream side (forward pumping) or downstream side (backward pumping) of the Raman amplification optical fiber through the optical coupler 91 a. This favorably amplifies the SC light Lb.

The third structure is suitable for the case where the optical fiber 3 is long (e.g., several hundreds of meters or more). Namely, as shown in the area (c) of Fig. 2, pumping light from a pumping light source 93b is supplied to the upstream side (forward pumping) or downstream side (backward pumping) of the optical fiber 3, which is the HNLF, through an optical coupler 91b. As a consequence, the SC light Lb is favorably amplified by induced Raman scattering in the optical fiber 3 itself.

In the above-mentioned third and third structures, the wavelength range of the spectrum of the SC light Lb is centered at a frequency lower by about 13 THz than the frequency of the pumping light. The SC light Lb having a spectrum bandwidth of 100 nm or more can also be amplified by using a plurality of wavelengths of pumping light.

In the fourth structure, an OPA optical fiber (an HNLF different from the optical fiber 3 or the like) is arranged behind the optical fiber 3. Pumping light is supplied to the upstream side (forward pumping) or downstream side (backward pumping) of the OPA optical fiber through an optical coupler. This favorably amplifies the SC light Lb. The fourth structure can also be realized by the structure shown in the area (b) of Fig. 2.

The fifth structure is suitable for the case where the optical fiber 3 is long (e.g., several tens of meters or more). Namely, pumping light is supplied to the upstream side (forward pumping) or downstream side (backward pumping) of the optical fiber 3, which is the HNLF, through an optical coupler, whereby the SC light Lb is favorably amplified by an optical parametric effect in the optical fiber 3 itself. The fifth structure can also be realized by the structure shown in the area (c) in Fig. 2.

In the above-mentioned fourth and fifth structures, the SC light Lb is amplified under a structure in which respective phases of pumping light, signal light, and idler light match each other. These structures can favorably amplify the SC light Lb having a wide bandwidth of several hundreds of nm as well

Optical amplification by using optical amplification means having a structure such as those mentioned above amplifies the intensity of the SC light Lb by several to several tens of dB. In addition, using a saturation phenomenon of optical amplification stabilizes the intensity of amplified light even when the intensity fluctuates more or less in the incident light. Namely, even when the wavelength dependency or temporal fluctuation of the intensity of the SC light Lb is large before amplification, the intensity fluctuation in the SC light Lb after the optical amplification can be stabilized.

In the first embodiment, the light source section 20 is provided with the optical filter (tunable filter 13). Though the wavelength range of the irradiation light P3 emitted to the object A1 is limited by the tunable filter 13, the optical filter may also be arranged between the object A and light-detecting section 3. In this case, the optical filter limits the wavelength range of light to be detected L (which will be explained later) incident on the light-detecting section 3.

The light-detecting section 3 detects the light to be detected L. The light-detecting section 3 is realized by a photodiode (PD), a PD array, an infrared camera, or the like, and converts the light to be detected L from the object A to an electric quantity such as current value. Preferably, the light-detecting section 3 has a structure in which an InGaAs photosensitive layer is provided on an InP substrate as shown in the area (b) in Fig. 1. In this case, the wideband light to be detected L having a wavelength region of 0.8 $\mu$m or more but 3 $\mu$m or less can favorably be detected. In such a light-receiving device, any of Si, PbSe, InAs, PbS, and HgCdTe may be selected according to the detection wavelength. The substrate material is not limited to InP.

In the case where the light-receiving sensitivity of the light-detecting section 3 fluctuates depending on wavelengths and the like, it will be preferred that the spectral waveform of the irradiation light P3 has such a form as to compensate for a wavelength dependency of the light-receiving sensitivity of the light-detecting section 3. Namely, when the optical intensity of irradiation light P3 is made stronger and weaker in respective wavelength regions where the light-receiving sensitivity of the light-detecting section 3 is lower and higher, a uniform detection result can be obtained over a wide band regardless of the wavelength dependency of the light-detecting section 3.

The control/analyzing part 4 is equipped with both of a function as a control part which controls fluorescence timings of the laser light P1 from the seed light source 2 and detection timings in the light-detecting section 3, and a function as a signal processing section which generates at least one of spectral waveform information and temporal waveform information (temporal intensity change information) concerning the light to be detected L according to electric signals (results of detection) from the light-detecting section 3. The information generated by the control/analyzing part 4 is displayed by the I/O part 5, so as to be analyzed. In the analyzing apparatus 1, the control/analyzing part 4 and I/O part 5 constitute a signal processing section.

A part of the SC light P2 may be branched off, so as to be detected as reference light. In this case, a more accurate near-infrared absorption spectrum can be obtained by comparing the reference light and the detection light L with each other.

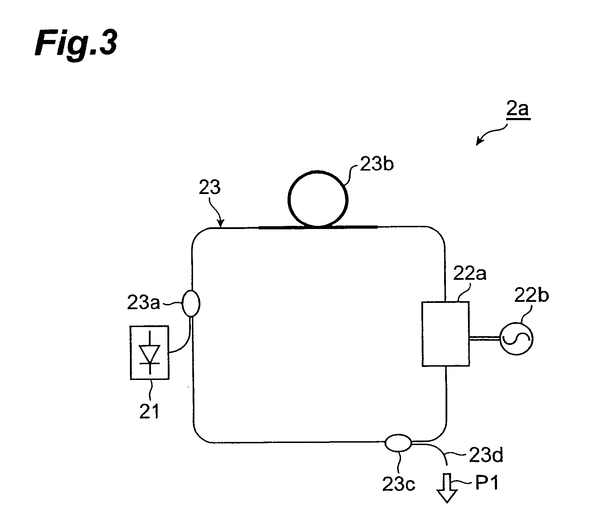

A detailed structure of the seed light source 2 will now be explained. Fig. 3 is a diagram showing the structure of a pulse light source 2a as a first structure of the seed light source 2. The pulse light source 2a is a so-called active mode synchronization type ultrashort pulsed light generating source, and is constituted by a ring type resonator. Namely, the pulse light source 2a comprises a semiconductor laser device 21, an LN modulator 22a, a signal generator 22b for driving the LN modulator 22a, and a ring-like cavity (optical waveguide) 23. The semiconductor laser device 21 is optically connected to the ring-like part of the cavity 23 through a coupler 23a. The ring-like part of the cavity 23 is optically connected to an output optical waveguide 23d through a coupler 23c. An erbium-doped optical fiber (EDF) 23b and the LN modulator 22a are optically connected in series to the ring-like part of the cavity 23.

When an electric pulse signal at a predetermined frequency is sent from the signal generator 22b to the LN modulator 22a, the optical loss in the LN modulator 22a decreases by a period corresponding to the frequency. Pumping light is supplied from the semiconductor laser device 21 to the ring-like part of the cavity 23. When the LN modulator 22a is controlled such that an oscillation occurs at the time when phases of modes included in light within the EDF 23b pumped by the pumping light are in synchronization with each other, ultrashort pulsed laser light having a pulse width of several femtoseconds will be generated and periodically emitted from the output optical waveguide 23d to the outside. The analyzing apparatus 1 shown in the area (a) of Fig. 1 utilizes this periodic ultrashort pulsed light as laser light La. Here, the repetition frequency of the laser light La equals the frequency of the electric pulse signal sent from the signal generator 22b to the LN modulator 22a.

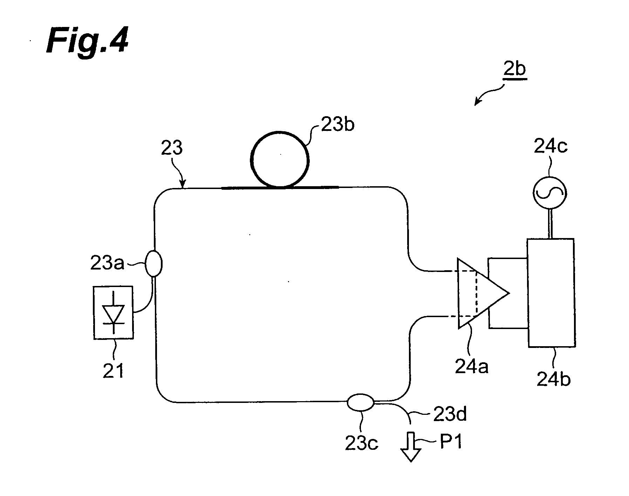

Fig. 4 is a diagram showing the structure of a pulse light source 2b as a second structure of the seed light source 2. The pulse light source 2b is a so-called passive mode synchronization type ultrashort pulsed light generating source, and is constituted by a ring type resonator. Namely, the pulse light source 2b comprises a semiconductor laser device 21, a ring-like cavity (optical waveguide) 23, a reflecting mirror 24a, a piezo motor 24b attached to the reflecting mirror 24a, and a signal generator 24c for driving the piezo motor 24b. As in the above-mentioned pulse light source 2a (the area (a) of Fig. 1), the semiconductor laser device 21 is optically connected to the cavity 23, the cavity 23 has the output optical waveguide 23d, and the EDF 23b is optically coupled to the ring-like part of the cavity 23.

In the pulse light source 2b, the reflecting mirror 24a is provided in place of the LN modulator 22a in the pulse light source 2a. The reflecting mirror 24a constitutes a portion of the ring-like part of the cavity 23, so that the length of the ring-like part of the cavity 23 periodically changes when the position of the reflecting mirror 24a vibrates. The vibration of the reflecting mirror 24a is provided by the piezo motor 24b. Its vibration frequency is controlled by the signal generator 24c that drives the piezo motor 24b.

When an electric pulse signal at a predetermined frequency is sent from the signal generator 24c to the piezo motor 24b, the length of the cavity 23 fluctuates by a period corresponding to this frequency. Pumping light is supplied to the ring-like part of the cavity 23 from the semiconductor laser device 21. At the instant when the length of the cavity 23 satisfies a soliton condition, an ultrashort pulsed laser light having a pulse width of about several femtoseconds is generated. This ultrashort pulsed laser light is periodically emitted as laser light La from the output optical waveguide 23d to the outside of the pulse light source 2b. Here, the repetition frequency of the laser light La equals the frequency of the electric pulse signal sent from the signal generator 24c to the piezo motor 24b. Since the periodic ultrashort pulsed light is generated by mechanically driving the reflecting mirror 24a, the repetition frequency of the laser light La tends to become smaller in the pulse light source 2b than in the pulse light source 2a having a structure in which the LN modulator 22a is driven electrically.

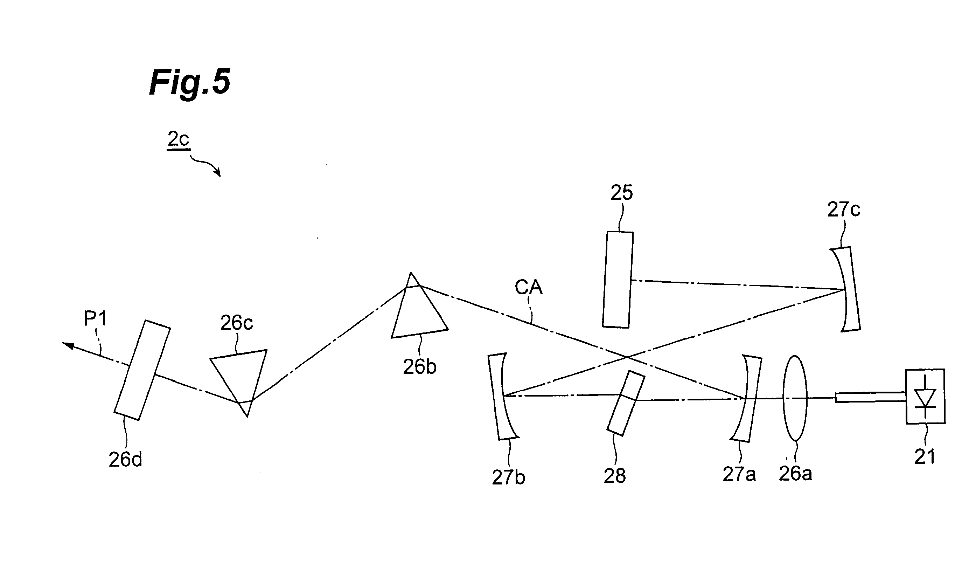

Fig. 5 is a diagram showing the structure of a pulse light source 2c as a third structure of the seed light source 2. The pulse light source 2c is a so-called passive mode synchronization type ultrashort pulsed light generating source, and is constituted by a solid-state laser made of Er:Yb-codoped glass. Namely, the pulse light source 2c has a semiconductor laser device 21, a saturable absorber mirror 25 in which a saturable absorber and a reflecting mirror are integrally constructed, a collimator lens 26a, prisms 26b and 26c, an output coupler 26d, mirrors 27a to 27c, and an Er:Yb-codoped glass sheet 28. Among them, the constituents other than the semiconductor laser device 21 and collimator lens 26a constitute a cavity CA for laser oscillation.

The pumping light emitted from the semiconductor laser device 21 reaches the Er:Yb-codoped glass sheet 28 through the collimator lens 26a and mirror 27a, thereby pumping the Er:Yb-codoped glass sheet 28. The Er:Yb-codoped glass sheet 28 is arranged on the cavity CA constituted by the saturable absorber mirror 25, prisms 26b and 26c, output coupler 26d, and mirrors 27a to 27c. The light advancing through the cavity CA reciprocates between the saturable absorber mirror 25 and output coupler 26d while being amplified by the Er:Yb-codoped glass sheet 28.

The saturable absorber mirror 25 has such a property as to absorb weak light but reflect strong light. Since the intensity of light becomes a maximum when phases of modes included in the light having reached the saturable absorber mirror 25 are in synchronization with each other, the saturable absorber mirror 25 functions as a reflecting mirror only at this instant, thereby generating laser oscillation. Therefore, this laser light becomes ultrashort pulsed light having a pulse width of about several femtoseconds, and is emitted as the laser light La from the output coupler 26d to the outside. Here, the repetition frequency of the laser light La becomes a value corresponding to the length of the cavity CA.

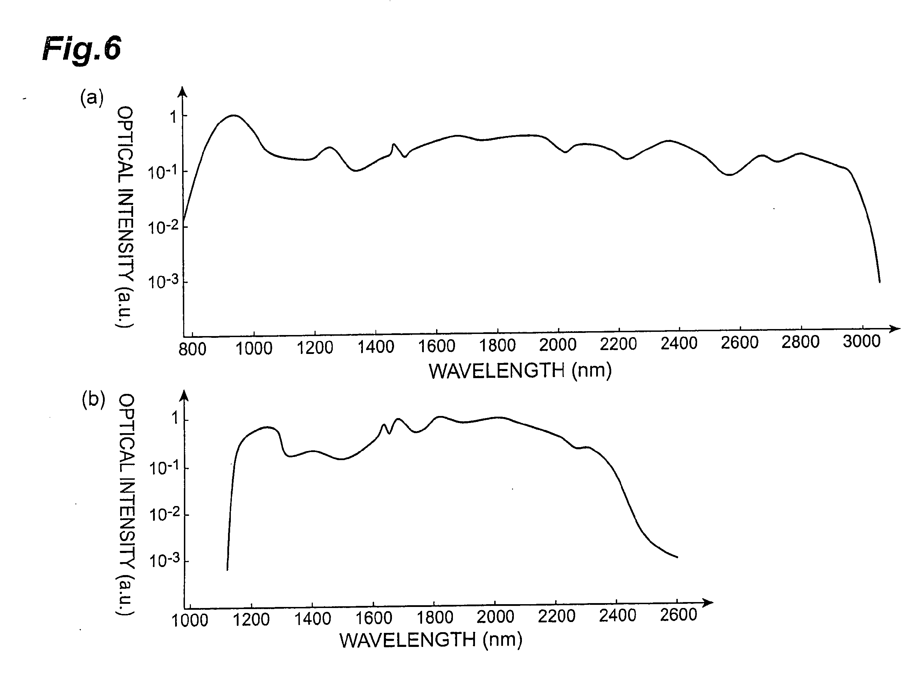

Figs. 5 and 6 are spectra of the SC light P2 emitted from the optical fiber 9. Namely, in Fig. 5, the area (a) shows an SC light spectrum whose spectrum band is 0.8 $\mu$m or more but 3 $\mu$m or less, while the area (b) shows an SC light spectrum whose spectrum band is 1.1 $\mu$m or more but 2.4 $\mu$m or less. In Fig. 6, the area (a) shows an SC light spectrum whose spectrum band is 1.35 $\mu$m or more but 1.65 $\mu$m or less, while the area (b) shows an SC light spectrum whose spectrum band is 1.3 $\mu$m or more but 1.8 $\mu$m or less. In Figs. 5 and 6, the value of spectral intensity on the ordinate is normalized with its peak value taken as 1. The SC light P2 having a flat spectrum over a wide band as such can favorably be generated when the HNLF is used as the optical fiber 9 as in the first embodiment.

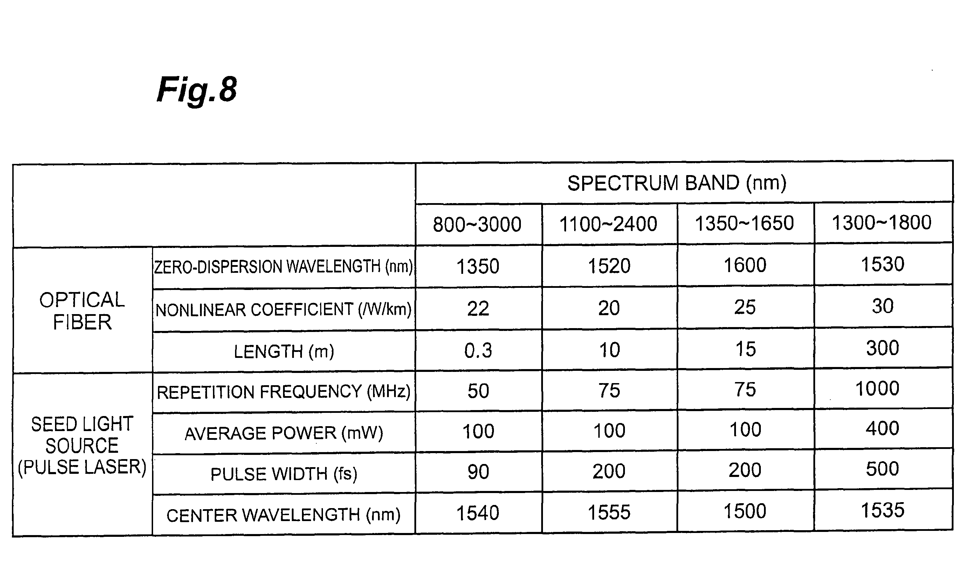

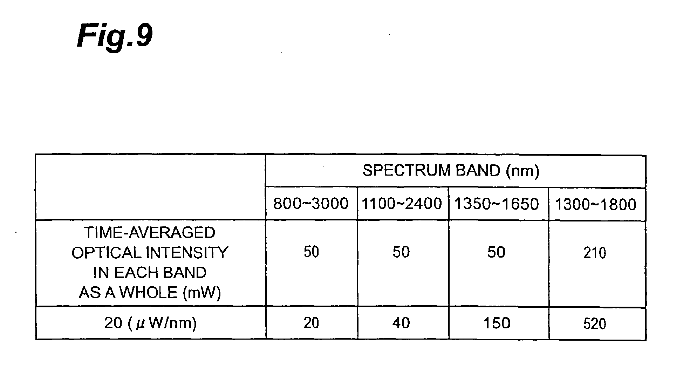

Fig. 8 is a table showing conditional examples of optical fibers for realizing the SC light spectra shown in Figs. 5 and 6. Fig. 9 is a table showing magnitudes of time-averaged optical intensity and average spectral component intensity (radiant flux per unit wavelength) in the whole spectra of SC light obtained under the conditions shown in Fig. 8.

Effects of the analyzing apparatus 1 according to the first embodiment will now be explained. The analyzing apparatus 1 according to the first embodiment makes the laser light P1 incident on the solid optical fiber 9 (HNLF) instead of the PCF having a void, thereby generating the SC light P2 including SC light. The zero-dispersion wavelength of the optical fiber 9 is set to 1.3 $\mu$m or more but 1.8 $\mu$m or less, while the center wavelength of the laser light P1 is also set to 1.3 $\mu$m or more but 1.8 $\mu$m or less. This favorably generates the SC light P2 having a long-wavelength, wideband spectrum centered at the zero-dispersion wavelength. Therefore, the analyzing apparatus 1 according to the first embodiment enables infrared spectrometry and the like up to a longer wavelength region.

The analyzing apparatus 1 according to the first embodiment employs the solid HNLF instead of the PCF as the optical fiber 9, and thus can easily splice fibers to each other, while the optical loss at the interface can be kept low. Further, the risk of end facet being damaged (molten) by the energy of the laser light P1 emitted from the seed light source 2 is small, whereby the relatively strong SC light P2 having an optical intensity (peak intensity of a pulse when the SC light is pulsed) of 0.1 $\mu$W/nm or greater can favorably be generated. Thus, the analyzing apparatus 1a is excellent in practicality. Though the upper limit for the optical intensity of the SC light P2 is about 1000 $\mu$W/nm, for example, it can be made stronger depending on the spectrum band of the SC light P2 and the intensity of the incident light (laser light P1).

In general, the PCF has a large polarization mode dispersion (PMD), so that the state of polarization in its target of propagation is unstable, whereby the band of generation and intensity of the emitted SC light are hard to stabilize. By contrast, as compared with the PCF, the solid HNLF has better structural controllability and lower relative refractive index difference of core/cladding, whereby the polarization dependency of PMD and the like is smaller. In particular, the coupling between polarizations can substantially be neglected by employing a polarization-preserving fiber. Therefore, in the optical intensity of the SC light P2 generated, the state of polarization propagating through the HNLF is stabilized. Thus, the analyzing apparatus 1 according to the first embodiment can make the temporal fluctuation width of the intensity of SC light P2 (peak intensity when the SC light P2 is pulsed) become a very small value within $\pm 5\%$ per hour.

In the case that a plurality of wavelengths of light different from each other are needed in infrared spectrometry and the like, the apparatus itself will become bulky in general while light sources corresponding to the respective wavelengths are prepared. By contrast, since the light source section 20 generates the SC light P2 having a wideband spectrum, the analyzing apparatus 1 according to the first embodiment can easily generate a plurality of wavelengths of light from a single light source by using the tunable filter 13, prisms which are not depicted, and the like, for example. Therefore, this analyzing apparatus 1 can reduce the size of the apparatus itself.

Preferably, the light source section 20 has optical amplification means for amplifying the SC light P2 by supplying it with pumping light having a wavelength different from that of the laser light P1. This can easily generate the irradiation light P3 having a given optical intensity. Saturating the output optical intensity from the optical amplification means can keep the intensity of the spectrum owned by the SC light P2 from changing. In particular, the above-mentioned first to fifth structures (see Fig. 2) can extremely effectively amplify the SC light P2 when the band of the irradiation light P3 is limited.

Preferably, the analyzing apparatus 1 according to the first embodiment has the tunable filter 13 to limit the wavelength range of the irradiation light P3 emitted to the object A. In infrared spectrometry, the intensity of each wavelength component can be seen by dividing the light to be detected L with a spectroscope. However, the analysis can be conducted easily by limiting the wavelength range of the irradiation light P3 by an optical filter such as the tunable filter 13 without using an expensive spectroscope. When the wavelength range is made changeable by the tunable filter 13, a plurality of substances to be measured which differ from each other in terms of at least one of absorption wavelength, reflection wavelength, and pumping wavelength can easily be analyzed without exchanging filters. Further, the detection wavelength can easily be adjusted according to the absorption wavelengths of substances to be measured and the like.

When the kinds of substances to be measured are limited in the object A1, an optical filter having a fixed wavelength range which limits the wavelength range of the irradiation light P3 to a specific range may be employed in place of the tunable filter 13. In this case, a plurality of kinds of optical filters whose transmission wavelengths differ from each other may be used, so as to limit the wavelength of the irradiation light P3 such that the irradiation light P3 includes a plurality of wavelengths.

Such an optical filter may be arranged between the object A and light-detecting section 3, so as to limit the wavelength range of the light to be detected L. In this case, effects similar to those in the structure in which the tunable filter 13 is arranged between the optical fiber 9 and object A can favorably be obtained.

The first embodiment uses an optical filter such as the tunable filter 13 as spectroscopic means for limiting the wavelength range. However, the light to be detected L may also be divided by using a spectroscope or the like in place of the optical filter. Examples of structures employing a spectroscope as such may include a structure (A) in which a spectroscopic device (prism, bulk type grating device, or the like) is arranged between the object A and light-detecting section 3, a structure (B) utilizing Fourier transform spectrometry, and the like.

In the structure (A) in the above-mentioned structures, the spectroscopic device is arranged between the object A and light-detecting section 3, while an array-like light-receiving device is employable as the light-detecting section 3. In this case, light incident on the light-detecting section 3 at a specific position has spectral intensity information at a specific wavelength, whereby spectrometry can favorably be performed. Alternatively, a single light-detecting device may be used as the light-detecting section 3 and rotated (or the light-detecting section 3 is translated), so as to detect the light to be detected L transmitted through the spectroscopic device. Each of the structures can favorably perform spectrometry.

The following structure is favorable as an example of the structure (B). Namely, using a half mirror, a fixed mirror, a movable mirror, and the like, the optical path of the irradiation light P3 incident on the object A is split into two, and the optical path length of one of them is made variable. Then, the optical length of the one is adjusted, so as to detect the interference intensity, whereby a spectrum can favorably be obtained by Fourier transform according to the relationship between the interference intensity and optical path length.

(Second Embodiment)

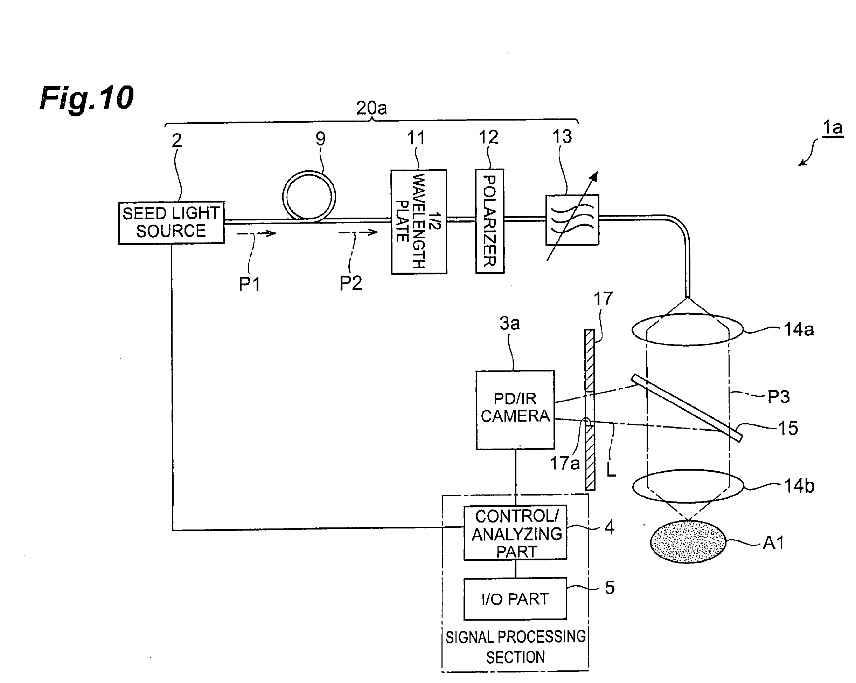

Fig. 10 is a diagram showing the structure of a second embodiment of the analyzing apparatus according to the present invention. By employing infrared spectroscopy, the analyzing apparatus 1a according to the second embodiment specifies various substances and analyzes the state of distributions and particle sizes of object substances. Namely, as shown in Fig. 10, the analyzing apparatus 1a comprises a light-detecting section 3a, a control/analyzing part 4, an I/O part 5, a collimator lens 14a, a condenser lens 14b, a half mirror 15, a pinhole plate 17, and a light source section 20a. Among them, the structures of the light-detecting section 3a, control/analyzing part 4, and I/O part 5 are the same as those of the light-detecting section 3, control/analyzing part 4, and I/O part 5 in the above-mentioned first embodiment and thus will not be explained in detail. The control/analyzing part 4 and I/O part 5 constitute a signal processing section in the second embodiment as well.

The light source section 20a is a light-emitting unit which irradiates an object A1 such as drug with irradiation light P3 based on supercontinuum light (SC light). The light source section 20a includes a seed light source 2, an optical fiber 9 having an entrance end optically connected to the seed light source 2, a half-wave plate 11 optically connected in series to an exit end of the optical fiber 9, a polarizer (polarizing plate) 12, and a tunable filter 13. Among them, the structures of the seed light source 2, optical fiber 9, and tunable filter 13 are the same as those in the light source section 20 in the first embodiment.

The half-wave plate 11, polarizer 12, and tunable filter 13 are optical components for converting the SC light P2 to the irradiation light P3. Namely, the SC light emitted from the optical fiber 9 is circularly polarized by the half-wave plate 11, and its plane of polarization is defined by the polarizer 12. The polarizer 12 is provided so as to be rotatable about the optical axis, and is contrived such that the orientation of the plane of polarization of the SC light P2 can be changed freely. Thereafter, the SC light P2 is limited in terms of its wavelength range by the tunable filter 13, and is emitted as the irradiation light P3.

The collimator lens 14a and condenser lens 14b are irradiation diameter restricting parts for restricting an irradiation area of the irradiation light P3 on the surface of the object A1 into a spot, and are optically connected to the light exit end of the light source section 20a. The collimator lens 14a collimates the irradiation light P3 emitted from the light source section 20a. The condenser lens 14b converges the collimated irradiation light P3 onto the object A1. For enhancing the optical intensity (illuminance) per unit area of the irradiation light P3, it will be preferred that the irradiation diameter of the irradiation light P3 on the surface of the object A1 is 1 $\mu$m or more but 50 mm or less. When expanding the irradiation beam, on the other hand, the condenser lens 14b may be removed. A cylindrical lens may be used in place of the condenser lens 14b, so as to limit the irradiation area of the irradiation light P3 into a line, whereby the light source section 20a becomes a linear light source.

The half mirror 15 is an optical component for guiding the light to be detected L generated in the object A1 to the light-detecting section 3a, and is disposed between the collimator lens 14a and condenser lens 14b. Here, the light to be detected L is light from the object A1 resulting from the irradiation light P3, examples of which include parts of the irradiation light P3 reflected or scattered by substances to be measured within the object A1 and fluorescences generated when the substances to be measured are pumped by the irradiation light P3.

The pinhole plate 17 is an optical component for constructing a confocal optical system. Namely, the pinhole plate 17 is constituted by a planar member having a pinhole 17a, and is arranged between the light-detecting section 3a and half mirror 15 such that the pinhole 17a is positioned on the light-receiving surface of the light-detecting section 3a. By removing the reflected light from everywhere other than the location in focus, the pinhole plate 17 can improve the resolving power when analyzing the object A1 requiring a precision in the depth direction, for example.

As an example of infrared spectrometry using the analyzing apparatus 1a, particle size distribution measurement and dispersion measurement of a drug will now be explained.

(Particle Size Measurement)

When manufacturing a drug, fluctuations in its particle size are required to be made smaller in order to restrain its effective time within a body from fluctuating. Therefore, it will be preferred that the particle size distribution can be measured in the manufacturing process. For measuring the particle size distribution, it will be sufficient that a drug sample (object A1) is irradiated with pulsed irradiation light P3 including a wavelength component corresponding to a reflection wavelength of the substance to be measured, and the pulse form of the light to be detected L obtained from the drug sample and the pulse form of the irradiation light P3 are compared with each other. Examples of the method of measuring the particle size distribution of the drug include a method in which the irradiation light P3 emitted from the light source section 20a is branched off, so as to extract a temporal delay component of reflected return light caused by optical scattering occurring within the drug sample when the drug sample is irradiated with light, thereby determining the particle size distribution; a method in which a reference reflecting plate or the like is placed as a reference pulse form sample after measuring a pulse response of the reflected return light from the drug sample, the pulse response of the reflected return light is measured similarly, and the difference between them is measured; and the like. A measurement system such as the analyzing apparatus 1a has a high resolution in the depth direction of the object to be measured, and thus can measure the particle size distribution in detail.

Then, according to the result of comparison (difference or the like) between the pulse waveforms of the light to be detected L and irradiation light P3, an analysis by a statistical technique such as chemometrics and principal component analysis is conducted, and measurement is effected while changing wavelengths according to reflected light intensities of a plurality of drug components, whereby particle size distributions of a plurality of components contained in the sample can be evaluated.

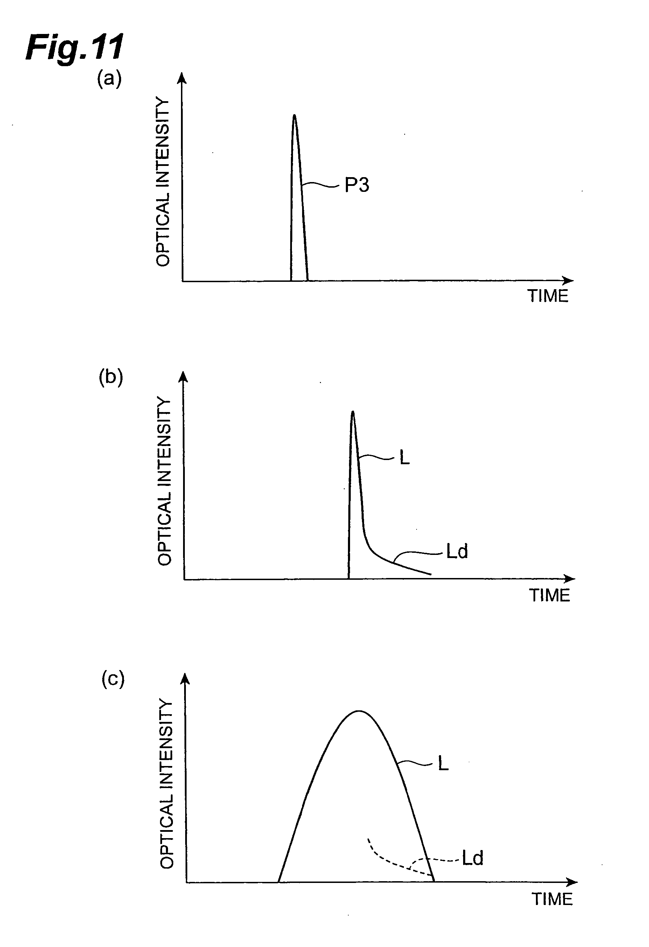

Fig. 11 is a chart showing an example of pulse form of irradiation light and an example of pulse form of light to be detected. In Fig. 11, the area (a) shows an example of pulse form of the irradiation light P3. The area (b) shows an example of pulse form of the light to be detected L. When a drug sample is irradiated with the irradiation light P3, the light to be detected L obtained from the drug sample includes minutely scattered light Ld. The optical intensity of the minutely scattered light Ld depends on the particle size distribution of the object A1. Since the minutely scattered light Ld reaches the light-detecting section 3a later in time than typical reflected light, the skirt of the pulse of the light to be detected L is widened by the minutely scattered light Ld as shown in the area (b) of Fig. 11. Detecting this skirt part yields the optical intensity of the minutely scattered light, from which the particle size distribution can be estimated.

When the pulse width of the irradiation light P3 is too long, for example, the minutely scattered light Ld is hidden by a pulse of the light to be detected L as shown in the area (c) of Fig. 11 and thus becomes hard to detect. By contrast, the light source section 20a in the second embodiment can irradiate the object A1 with an ultrashort pulse having a time width on the order of several femtoseconds as the irradiation light P3. Thus, the second embodiment can accurately determine the intensity of the minutely scattered light Ld, thereby enabling accurate measurement.

As a further simpler method, the object A1 may be irradiated with the irradiation light P3, and the light transmitted therethrough may be detected as the light to be detected L. In this case, an average particle size distribution in the thickness direction of the object to be measured can be estimated from the attenuation factor of the transmitted light.

(Measurement of Dispersion of Drug)

For homogenizing effects of a drug within its effective time, components contained in the drug are required to be dispersed uniformly, so that fluctuations in the effects of the drug are made smaller. Therefore, it will be preferred that the state of dispersion of drug components can be measured in the manufacturing process. For measuring the state of dispersion of components, it will be favorable that a drug sample (object A1) is irradiated with the pulsed irradiation light P3, and the distribution of a fluorescence (light to be detected L) such as fluorescence generated within the drug sample is measured.

In particular, the object is irradiated with the irradiation light P3 including a wavelength component corresponding to the pumping wavelength of a specific component, whereby a fluorescence such as fluorescence from the specific component included in the light to be detected L is extracted by a wavelength-selective filter or the like, and then its fluorescence intensity is detected by the two-dimensional light-detecting section 3a. When the result of detection is displayed as image information (data) by the I/O part 5, whether the specific component is uniformly dispersed or not can easily be determined according to the concentration of fluorescence in locations of the drug.

When the time response of the fluorescence (light to be detected L) with respect to the irradiation light P3 is taken into consideration, the dispersion homogeneity in the thickness direction of the object A1 (tablet or powder in particular) can easily be evaluated in a short time. This makes it possible to measure in-situ the dispersion homogeneity in the thickness direction, which has conventionally required a destructive test (see Nonpatent Document 1).

Using the analyzing apparatus 1a according to the second embodiment in a method of analyzing a drug such as the above-mentioned particle size distribution measurement and dispersion measurement makes it applicable to a process analytical technology (PAT) for medicines. In the PAT, utilizing a statistical analyzing technique such as chemometrics and multiple regression dispersion measurement, adjustment parameters in the process of manufacturing a medicine are clarified, and the product can be homogenized while feeding back results of measurement such as the above-mentioned particle size distribution and dispersion. On the other hand, the PAT in a narrow sense can be used in a so-called batch test (simplification of a test) in which a drug sample is considered acceptable when its fluorescence distribution obtained when irradiated with one or more wavelength components of light can be determined substantially the same as reference data.

As with the analyzing apparatus 1 according to the first embodiment, the analyzing apparatus 1 according to the second embodiment is excellent in practicality and enables infrared spectrometry and the like up to a longer wavelength region. Therefore, drug analyses such as particle size distribution measurement and dispersion measurement can accurately be performed for various drugs.

The analyzing apparatus 1a according to the second embodiment may comprise a polarizer (polarizing plate) 12 for making the plane of polarization of the irradiation light P3 variable. Even when the absorption characteristic (or fluorescence characteristic) of a substance to be measured greatly depends on the polarization of the irradiation light P3, the contrast of information concerning the substance to be measured included in the light to be detected L can be enhanced at the time that the plane of polarization of the irradiation light P3 is thus made variable.

(Third Embodiment)

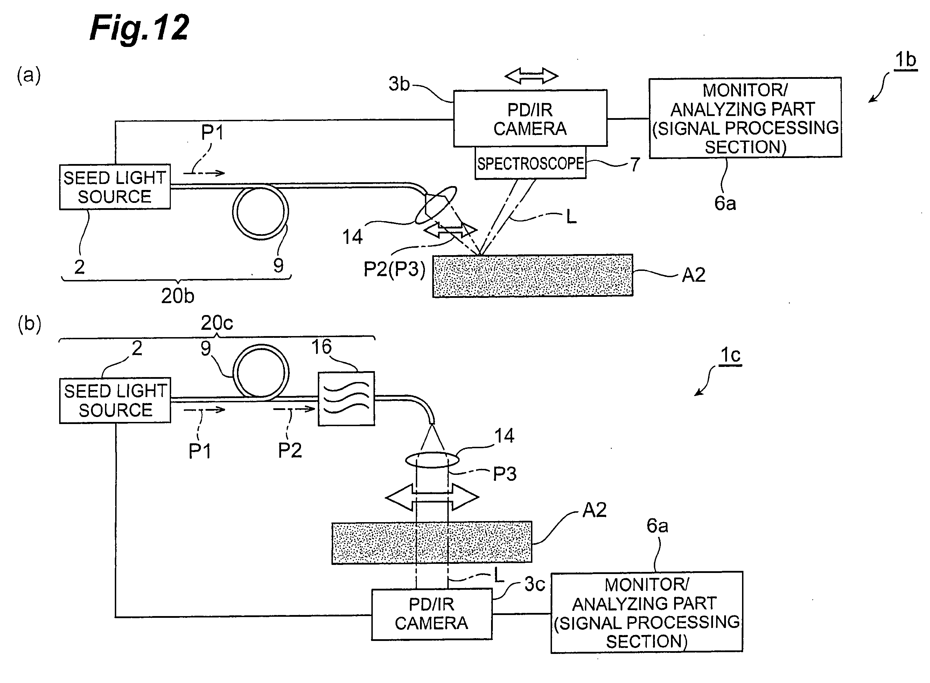

The areas (a) and (b) of Fig. 12 are diagrams showing structures of a third embodiment of the analyzing apparatus according to the present invention. The analyzing apparatuses 1b and 1c shown in the areas (a) and (b) are modified examples of the analyzing apparatus 1 according to the above-mentioned first embodiment, and can be used for near-infrared spectrometry at the time of food inspections and the like, for example.

As shown in the area (a) of Fig. 12, the analyzing apparatus 1b comprises a light-detecting section 3b, a monitor/analyzing part 6a (included in a signal processing section), a spectroscope 7, a lens 14, and a light source section 20b. The light source section 20b is a constituent for irradiating an object A2 such as food with SC light P2 as irradiation light P3. The light source section 20b is constituted by a seed light source 2 and an optical fiber 9. The structures of the seed light source 2 and optical fiber 9 are the same as those in the first embodiment.

The lens 14 is an irradiation diameter restricting part for restricting an irradiation area of the irradiation light P3 (SC light P2) on the surface of the object A2 into a spot, and is optically connected to the light exit end of the light source section 20b. The lens 14 makes the irradiation diameter fall within an appropriate range according to the size of the object (narrowed for small seeds such as sesame and rice grain and widened for large fruits such as orange, apple, and melon). Namely, the lens 14 turns the irradiation diameter of the irradiation light P3 on the surface of the object A2 into a spot of 1 $\mu$m or more but 50 mm or less in order to enhance the optical intensity (illuminance) of the irradiation light P3 per unit area.

The spectroscope 7 is an optical component for dividing light to be detected L from the object A2. Examples of structures suitable as the spectroscope 7 are one using a prism or bulk type grating device, and one utilizing Fourier transform spectrometry.

The light-detecting section 3b detects the light to be detected L. The light-detecting section 3b in the third embodiment is realized by a photodiode (PD), PD array, infrared camera, or the like, for example, receives reflected light or scattered light from the object A2 as the light to be detected L, and converts its optical intensity into an electric quantity such as current value. The detailed structure of the light-detecting section 3b is the same as that of the light-detecting section 3 in the first embodiment.

The monitor/analyzing part 6a is equipped with both of a function as a control part which controls fluorescence timings of the laser light P1 from the seed light source 2 and detection timings in the light-detecting section 3b, and a function as a signal processing section which generates spectral waveform information concerning the light to be detected L according to signals (results of detection) from the light-detecting section 3b. The monitor/analyzing part 6a also has a function as a display part for displaying thus generated spectral waveform information.

On the other hand, as shown in the area (b) of Fig. 12, the analyzing apparatus 1c comprises a light-detecting section 3c, a monitor/analyzing part 6a (signal processing section), a lens 14, and a light source section 20c. Among them, the monitor/analyzing part 6a and lens 14 have the same functions as those in the analyzing apparatus 1b.

The light source section 20c is a light-emitting unit for irradiating an object with irradiation light P3 based on SC light P2. Unlike the above-mentioned light source section 20b, the light source section 20c has not only a seed light source 2 and an optical fiber 9, but also an optical filter 16 optically connected to the exit end of the optical fiber 9. The optical filter 16 is an optical component for limiting the wavelength range of the irradiation light P3 to a predetermined range, and is provided in place of the spectroscope 7 in the area (a) of Fig. 12. A tunable filter may be used for the optical filter 16 in the third embodiment, whose transmission wavelength is fixed according to the absorption wavelength of a substance to be measured. The optical filter 16 may also be constructed by a plurality of wavelength-fixed filters having respective transmission wavelengths different from each other. In this case, the substance to be measured can be analyzed while using a plurality of wavelength components.

As with the above-mentioned light-detecting section 3b, the light-detecting section 3c is realized by a photodiode (PD), PD array, infrared camera, or the like, for example. However, this light-detecting section 3c receives the transmitted light from the object A2 as the light to be detected L, and converts its optical intensity into an electric quantity such as current. The detailed structure of the light-detecting section 3c is also the same as that of the light-detecting section 3 in the first embodiment.

Though the analyzing apparatuses 1b and 1c according to the third embodiment are equipped with the light-detecting section 3b for detecting the reflected light and the light-detecting section 3c for detecting the transmitted light, respectively, the analyzing apparatus 1b (or analyzing apparatus 1c) may have both of the light-detecting sections 3b, 3c, so as to capture both of the reflected light and transmitted light. Also, in the analyzing apparatus 1c, the position of the lens 14 or object A2 may be made relatively movable, so that the surface of the object A2 is scanned with the irradiation light P3.

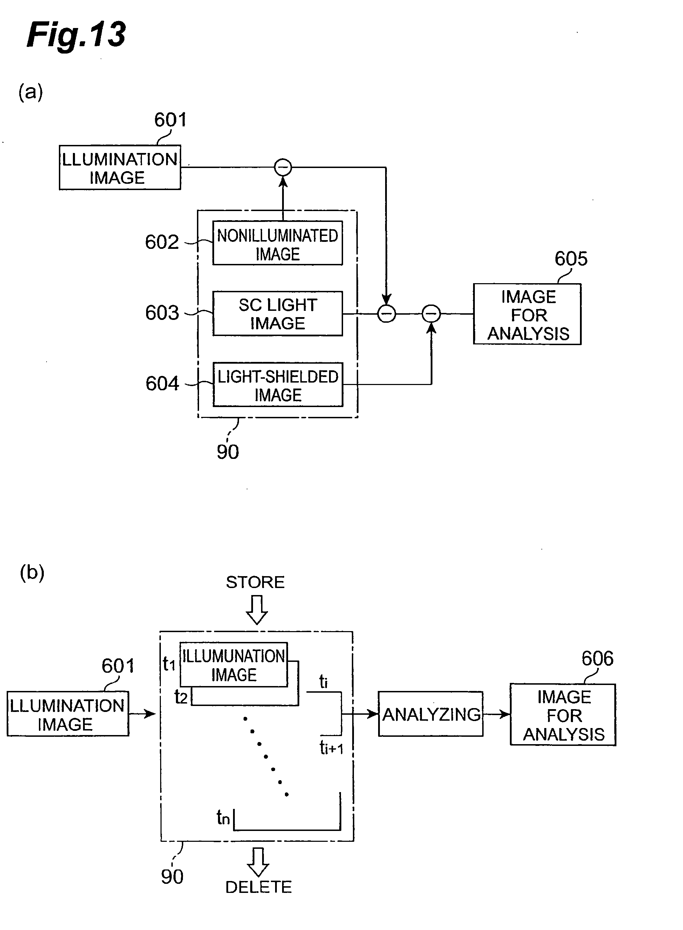

The analyzing apparatus according to the present invention may have a structure for improving the SN ratio of imaging data based on the light to be detected L2. Namely, for improving the SN ratio of generated imaging data, the signal processing section produces corrected imaging data having reduced a noise component from thus generated imaging data. Usually, in an environment where the analyzing apparatus is placed, the SN ratio of the resulting imaging data is deteriorated by stray light (e.g., sunlight, streetlight, and the like), ambient temperature, and surrounding environments (e.g., rain, fog, snow, and the like). Therefore, the SN ratio can be improved by utilizing a light-shielded image $V_N$ (device noise N of the light-receiving device itself) obtained in the state where the light-receiving surface of the light-receiving device is shielded, an SC light image $V_{SC}$ obtained by directly receiving the SC light by the light-receiving device, a nonirradiated image $V_{BK}$ obtained in the state not irradiated with the SC light, and an illumination image $V_{IL}$ (imaging data based on information about the light to be detected) obtained in the state irradiated with the SC light, for example. The area (a) of Fig. 13 is a diagram for explaining image processing (SN ratio improvement) in the processing part, whereas the respective components of light-shielded image $V_N$ 604, SC light image $V_{SC}$ 603, nonirradiated image $V_{BK}$ 602, and illumination image $V_{IL}$ 601 are given as follows:

light-shielded image $V_N$: N
SC light image $V_{SC}$: $P_{SC}$+ N
nonirradiated image $V_{BK}$: $(P_N - A_N)$ + N
illumination image $V_{IL}$: $(P_{SC} - A_{SC})$ + $(P_N - AN)$ + N

Here, the component of light-shielded image $V_N$ is given by the device noise N of the light-receiving device itself The component of SC light image $V_{SC}$ is a value in which the SC light power $P_{SC}$ emitted to the light-receiving device is detected together with the device noise N. The component of nonirradiated image $V_{BK}$ is a value in which the stray light power $P_N$ in the state lowered by the absorption component AN absorbed by the object to be detected is detected together with the device noise N. The component of illumination image $V_{IL}$ is a value in which the reflection component of SC light lowered by the absorption component $A_{SC}$ absorbed by the object to be detected $(P_{SC} - A_{SC})$ and the stray light component lowered by the absorption component AN $(P_N - AN)$ are detected together with the device noise N. The light-shielded image $V_N$ 604, SC light image $V_{SC}$ 603, and nonirradiated image $V_{BK}$ 602 may be acquired before infrared imaging and stored therebefore in a memory 90 of the signal processing section.

Here, the difference $(V_{IL} - V_{BK})$ between the illumination image $V_{IL}$ and nonirradiated image $V_{BK}$ is taken, whereby the component value given by the following expression (1) is obtained.

$$V_{IL} - V_{BK} = P_{SC} - A_{SC} \qquad (1)$$

Further, for eliminating the irradiation power $P_{SC}$ of SC light, the difference between the SC light image $V_{SC}$ and the component value obtained by expression (1) is taken.

$$V_{SC} - (V_{IL} - V_{BK}) = A_{SC} + N \quad (2)$$

The component value obtained by this expression (2) includes not only the absorption component $A_{SC}$ of SC light absorbed by the object to be detected, but also the device noise N. Therefore, further taking the difference between the component value obtained by expression (2) and the component value N of the light-shielded image $V_N$ yields an analysis image 605 including information about only the absorption component $A_{sc}$ of SC light in the object to be detected.

Thus, subtraction processing of these four kinds of images can clearly visualize the amount of absorption (including optical intensity information of the light to be detected in an absorption wavelength region of the object to be detected) at a specific wavelength in the object to be detected in the state where influences of disturbances such as stray light, ambient temperature, and surrounding environments are eliminated.

Further, the analyzing apparatus according to the present invention may have a structure for correcting a vibration of the imaging data based on the light to be detected. For example, when the signal processing section averages a plurality of imaging data items successively captured as time passes for each of the pixels corresponding thereto (e.g., provides an average value of luminance in each of the pixels corresponding thereto as new luminance information), influences of image blurs such as vibration can effectively be reduced. The area (b) of Fig. 13 is a diagram for explaining image processing (vibration correction) in the signal processing section.

Namely, as shown in the area (b) of Fig. 13, the signal processing section successively captures the illumination images 601 into the memory 90 along with the passing of times $t_1$, $t_2$, ..., $t_n$. Among thus captured illumination images, the illumination image at time $t_i$ and the illumination image at time $t_{i+1}$ are subjected to averaging, whereby an analysis image 606 having corrected blurs within the image is obtained. Since the storage capacity of the memory is limited, the used illumination images are sequentially deleted. When the vibration is large, the influence of vibration can further be reduced by increasing the number (number of frames) of the illumination images utilized for averaging. When the vibration is small, by contrast, the number (number of frames) of the illumination images utilized for averaging may be reduced.

As examples of infrared spectrometry utilizing the analyzing apparatus 1b (or analyzing apparatus 1c) according to the third embodiment, food inspection/selection, blood sugar level inspection, and underground search will now be explained.

(Food Inspection/Selection)

For example, food such as fruit is irradiated with the irradiation light P3, and the intensity ratio between the light to be detected L and irradiation light P3 at an absorption wavelength peculiar to a sugar such as fructose or glucose is detected, whereby the sugar can easily be measured. By detecting the intensity ratio between the light to be detected L and irradiation light P3 at an absorption wavelength peculiar to citric acid or ascorbic acid, acidity can easily be measured. By detecting the intensity ratio between the light to be detected L and irradiation light P3 at an absorption wavelength peculiar to ethylene or chlorophyll, maturity can easily be measured. By detecting the intensity ratio between the light to be detected L and irradiation light P3 at an absorption wavelength peculiar to pectin, hardness can easily be measured.

For this food inspection/selection, chemometrics is favorably employed. Namely, an optical intensity of a wavelength component of the light to be detected L corresponding to the absorption wavelength of a substance to be measured (fructose, citric acid, ethylene, or the like) or the optical intensity between this optical intensity and the optical intensity of another wavelength is prepared as an index. Then, according to relationships between this index and the water content, sugar content, acidity, and maturity which have been measured beforehand, the water content, sugar content, acidity, and maturity are quantified semiempirically by comparison with a calibration curve. The water content, sugar content, acidity, maturity, and the like may also be quantified according to the optical intensity of the light to be detected L at absorption wavelengths of some substances to be measured (e.g, near a wavelength of 2.1 $\mu$m for the water content, near a wavelength of 1.7 $\mu$m for the sugar content, near a wavelength of 1.1 $\mu$m for the acidity, near a wavelength of 0.9 $\mu$m for the maturity, and near a wavelength of 1.2 $\mu$m for the hardness in fruits).

As with the analyzing apparatus 1 according to the first embodiment, the analyzing apparatus 1b (or analyzing apparatus 1c) according to the third embodiment is excellent in practicality and enables near-infrared spectrometry and the like up to a longer wavelength region. Therefore, this apparatus can favorably measure substances to be measured having a relatively long absorption wavelength such as those mentioned above, and thus is suitable for food inspection/selection.

Known as an example of conventional near-infrared spectrometers is a structure which converts the wavelength of a femtosecond titanium sapphire laser to near-infrared light by using a nonlinear crystal (see Nonpatent Document 2). However, such a structure makes the apparatus expensive and bulky. As compared with such a conventional apparatus, the analyzing apparatus 1b (or analyzing apparatus 1c) according to the third embodiment is simple in the apparatus structure and can realize a smaller size. Since the optical fiber 9 can also be utilized as an optical fiber probe, even a portable type enables very accurate measurement. The apparatus requires no maintenance. Therefore, the analyzing apparatus 1b (or analyzing apparatus 1c) can be used when shipping food, and also makes it easy to select food matured for eating or rotten food when the analyzing apparatus is prepared in a warehouse or store.

The analyzing apparatus 1b (or analyzing apparatus 1c) according to the third embodiment is applicable to not only fruits but also a wide range of foods such as seeds, cereals, seafood, and meat. Processed foods such as soy sauce and soybean paste also have spectra peculiar to manufacturers and products. Therefore, the analyzing apparatus 1b (or analyzing apparatus 1c) according to the third embodiment is also suitable for managing the processed foods.

The analyzing apparatus 1b (or analyzing apparatus 1c) according to the third embodiment uses a solid HNLF as the optical fiber 9 for generating the SC light as in the first embodiment. This can enhance the optical intensity of the SC light P2 as compared with the case using the PCF. Also, light can be converged more easily than in the case using illumination such as a halogen lamp. Therefore, the apparatus can easily measure fruits having hard peels (melon, pineapple, etc.) which have been hard to measure by conventional infrared spectrometers.

In foods such as fruits and cereals, spectra of the light to be detected L may vary depending on their places of origin. In such a case, the analyzing apparatus 1b (or analyzing apparatus 1c) according to the third embodiment can investigate the places of origin. Also, the analyzing apparatus 1b (or analyzing apparatus 1c) can measure seeds grain by grain, so as to classify brand seeds and genetically modified seeds, thereby preventing them from mingling and hybridizing.

(Blood Sugar Level Inspection)

As mentioned above, the analyzing apparatus 1b (or analyzing apparatus 1c) according to the third embodiment can easily measure glucose. Therefore, the analyzing apparatus 1b or 1c is also suitable for noninvasive blood sugar level inspections. Though the apparatus disclosed in Patent Document 2 has been known as an example of conventional measurement apparatus, it still leaves a problem that the irradiation light intensity is weak and so forth while the apparatus is made greater. Practically, it will be preferred in terms of convergence and optical intensity that the solid optical fiber 9 (HNLF) is used as a source for generating the SC light as in the analyzing apparatus 1b (or analyzing apparatus 1c).

When amplified by optical amplification means (see Fig. 2) such as Raman amplifier and OPA, the SC light P2 can be amplified over a bandwidth of 100 nm to 300 nm. This can selectively amplify a wavelength component near 1.5 $\mu$m to 1.8 $\mu$m which is easily absorbable by glucose but less susceptible to water within a living body in particular, which is extremely favorable for blood sugar level inspections. Further, since the Raman amplifier and OPA can be used as normal optical fibers when not pumped, the optical amplification can easily be turned on/off.

The analyzing apparatus 1b (or analyzing apparatus 1c) according to the third embodiment is also favorable when inspecting collected blood, since results can be obtained instantaneously. The analyzing apparatus 1b (or analyzing apparatus 1c) can noninvasively perform not only blood sugar level inspections, but also inspections for blood lipid and uric acid level, for example.

(Underground Search)

The analyzing apparatus 1b (or analyzing apparatus 1c) uses near-infrared light having a relatively long wavelength, which scatters less within the object A1 and can also penetrate through a soil, which is a strongly scattering body, by about several centimeters to several meters. Therefore, for example, the apparatus can be arranged together with a drill, so as to predict a substance existing ahead of the drilling underground. In particular, after drilling underground, an underground subject as the object A1 is irradiated with the irradiation light P3. Then, the light to be detected L (transmitted/scattered light) from the underground substance caused by the irradiation light P3 is detected, and whether a specific substance (resource, water, or the like) exists or not is determined according to the intensity of a predetermined wavelength component included in the light to be detected L.

When the intensity of a wavelength component near 1.4 $\mu$m, which is an absorption wavelength of water, in the reflected light (light to be detected L) obtained by irradiating the soil with the irradiation light P3, for example, the fact that a water source is near can be detected in the above-mentioned underground searching method. It can be applied to various uses so as to eliminate dangers by preventing groundwater from being hit, detect hot springs, and so forth when constructing a tunnel and the like, for example. Further, when optical amplification means such as Raman amplifier and OPA are provided, the optical intensity (spectral radiant flux) of the irradiation light P3 can be enhanced to several W/nm.

The analyzing apparatus 1b (or analyzing apparatus 1c) is suitable not only for detecting water, but also for searching for oil wells. Namely, since absorption wavelengths derived from carbon double bonds (C=C, C=C-H, and the like) peculiar to oil wells exist near 1.7 $\mu$m to 1.8 $\mu$m, the existence of an oil well can be detected at the time that a change occurs in the component intensity in this wavelength range in the light to be detected L from the soil.

As with the analyzing apparatus 1 according to the first embodiment, the analyzing apparatus 1b (or analyzing apparatus 1c) according to the third embodiment is excellent in practicality and enables infrared spectrometry and the like up to a longer frequency region. Therefore, an underground searching method which can search for various kinds of substances can be provided.

The analyzing apparatus 1b (or analyzing apparatus 1c) can realize a spectrum of irradiation light P3 over a wide band such as those shown in the areas (a) and (b) of Fig. 6. Therefore, infrared spectrometry over a wide wavelength range is possible with a single light source (light source section 20a), whereby a water distribution can easily be seen by measuring the intensity of a wavelength component near 1.0 $\mu$m which is hard to be absorbed by water and the intensity of a wavelength component near 2.0 $\mu$m which is easily absorbable by water at the same time, for example, and so forth. Simultaneously with detecting water, mineral ingredients contained in the water can be analyzed. Conventionally, water has been taken (sampled) from a digging site, and its ingredients have been analyzed. However, the third embodiment can save the trouble of sampling and thus can greatly cut the cost down.

The analyzing apparatus 1b (or analyzing apparatus 1c) is also suitable for analyzing products taken from mines. Namely, useful resources can also be detected by irradiating a drilled hole or excavated soil (rock) with the irradiation light P3 and analyzing the spectrum of the light to be detected L.

Though favorable uses of the analyzing apparatus 1b (or analyzing apparatus 1c) according to the third embodiment are explained in the foregoing, the analyzing apparatus 1b (or analyzing apparatus 1c) according to the third embodiment can also detect intermediates of chemical reactions such as molecules in pumped states, radical molecules, and pumped molecular complexes, for example. Therefore, the apparatus can also be employed for uses such as analyzes and inspections of laser chips, solar cells, optical memories, photocatalysts, and the like. When the apparatus is integrally controlled with a pumping laser for a chemical reaction, so that measurement is conducted while accurately managing the time from pumping to measurement, a time-resolved spectrum in the chemical reaction can accurately be obtained in the order from femtoseconds to nanoseconds.

(Fourth Embodiment)

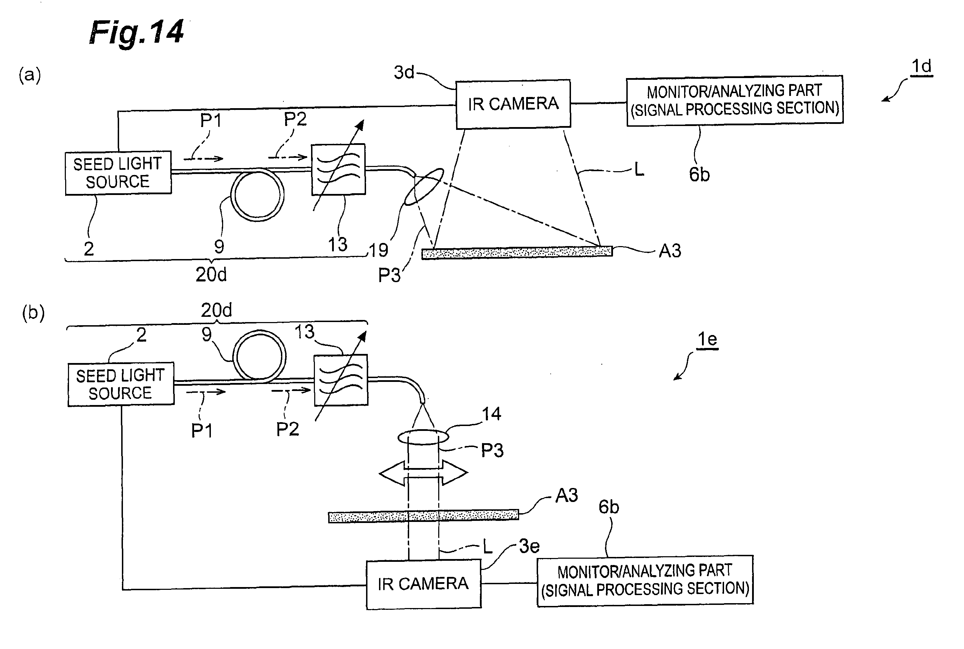

Fig. 14 is a diagram showing the structure of a fourth embodiment of the analyzing apparatus according to the present invention. The analyzing apparatus 1d, 1e shown in the areas (a) and (b) of Fig. 14 are modified examples of the analyzing apparatus 1 according to the above-mentioned first embodiment, and determine whether a printed matter A3 such as bill printed with a pattern by a plurality of inks different from each other in terms of at least one of absorption wavelength, reflection wavelength, and pumping wavelength is authentic or not (detect a counterfeit). As shown in the area (a) of Fig. 14, the analyzing apparatus 1d comprises a light-detecting section 3d, a monitor/analyzing part 6b (signal processing section), a lens 19, and a light source section 20d.

The light source section 20d is a light-emitting unit for irradiating the printed matter A3 with irradiation light P3 based on SC light P2. The light source section 20d is constituted by a seed light source 2 which emits laser light P1, an optical fiber 9 which is a solid HNLF inputting the laser light P1 and emitting the SC light P2, and a tunable filter 13 optically coupled to the exit end of the optical fiber 9. Detailed structures of the seed light source 2, optical fiber 9, and tunable filter are the same as those in the first embodiment. For example, the zero-dispersion wavelength of the optical fiber 9 falls within the range of 1.3 $\mu$m or more but 1.8 $\mu$m or less, and the center wavelength of the laser light P1 emitted from the seed light source 2 is also included in the same range.

The lens 19 is an optical component for irradiating the surface of the printed matter A3 with the irradiation light P3 over a wide area, and is optically connected to the light exit end of the light source section 20d.

The light-detecting section 3d detects (captures) light to be detected L caused by the irradiation light P3 from the printed matter A3. The light-detecting section 3d in the fourth embodiment is realized by a two-dimensional image pickup apparatus such as infrared light camera, for example, receives reflected or emitted light from the printed matter A3 as the light to be detected L, converts the optical intensity of each pixel thereof into an electric signal, and generates captured imaging data. The printed matter A3 in the fourth embodiment is printed with a pattern by a plurality of inks different from each other in terms of absorption wavelength or the like (specifically, their reflection spectra or fluorescence spectra differ from each other), whereas the light source section 20d emits the irradiation light P3 at a specific wavelength selected by the tunable filter 13. Therefore, the light to be detected L includes pattern information corresponding to the specific wavelength. Here, the pattern is not always needed to be two-dimensional, but may also be a linearly applied one.

The monitor/analyzing part 6b analyzes/displays the pattern recognized by the light to be detected L. The monitor/analyzing part 6b receives captured imaging data from the light-detecting section 3d, and analyzes/displays an image (including the pattern) based on the captured imaging data.

On the other hand, as shown in the area (b) of Fig. 14, the analyzing apparatus 1e comprises a light-detecting section 3e, a monitor/analyzing part 6b (signal processing section), a lens 14, and a light source section 20d. Among them, structures of the monitor/analyzing part 6b and light source section 20d are the same as those of the analyzing apparatus 1d shown in the area (a) of Fig. 14.

The lens 14 is a collimator lens (irradiation diameter restricting part) for restricting the irradiation area of irradiation light P3 on the surface of the printed matter A3 into a spot, and is optically connected to the light exit end of the light source section 20d. For enhancing the optical intensity (illuminance) of the irradiation light P3 per unit area, the lens 14 turns the irradiation diameter of the irradiation light P3 on the surface of the printed matter A3 into a spot of 1 μm or more but 50 mm or less. The position of the lens 14 or printed matter A3 may be made relatively movable, so that the surface of the printed matter A3 is scanned with the irradiation light P3.

The light-detecting section 3e detects (captures) the light to be detected L from the printed matter A3 caused by the irradiation light P3. As with the above-mentioned light-detecting section 3d, the light-detecting section 3e is realized by a two-dimensional image pickup device such as infrared camera. However, this light-detecting section 3e receives transmitted light from the printed matter A3 as the light to be detected L, and converts the optical intensity of each pixel thereof into an electric signal, thereby generating captured imaging data.

The analyzing apparatus 1d, 1e have the light-detecting section 3d detecting the reflected light and the light-detecting section 3e detecting the transmitted light, respectively, in the fourth embodiment as well. However, the analyzing apparatus 1d (or analyzing apparatus 1e) may have both of the light-detecting sections 3d, 3e, so as to capture both of the reflected light (or emitted light) and transmitted light.

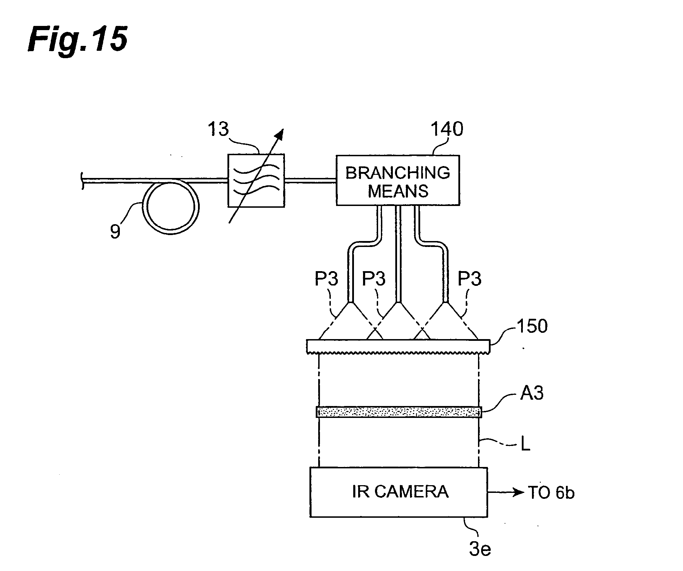

The light source section 20d may comprise a plurality of exit ends. When a plurality of exit ends for SC light are provided, an object can be irradiated more uniformly with irradiation light. In particular, as shown in Fig. 15, one-to-plural branching means 140 is arranged on the exit end side of the tunable filter 13, and a diffusing plate 150 is irradiated with the SC light P3 from a plurality of exit ends of the branching means 140. Irradiating the object such as printed matter A3 with irradiation light through the diffusing plate 150 makes it possible to reduce intensity differences caused by irradiation positions.

Fig. 15 is a diagram showing a modified example of the analyzing apparatus according to the fourth embodiment. Examples of the branching means 140 include not only optical components such as optical couplers, but also those having wavelength selectivity such as WDM couplers and AWG.

Since the solid optical fiber 9 generates the SC light P2, the analyzing apparatus 1d, 1e are excellent in practicality and make it possible to determine whether a printed matter is authentic or not over a wider frequency range. Examples of methods of determining the authenticity of a printed matter by utilizing the analyzing apparatus 1d (or analyzing apparatus 1 e) will now be explained.

(First Authenticity Determining Method)

Conventional counterfeit detecting apparatus (e.g., Patent Documents 3 and 4) include those detecting counterfeits of printed matters such as bills and cards by using a plurality of wavelengths of light. Namely, a printed matter coated beforehand with a plurality of inks having specific absorption wavelengths and the like is irradiated with irradiation light P3 having wavelengths corresponding to the absorption wavelengths and the like, whereby the plurality of inks are detected, and whether there is a counterfeit or not is determined. When the number of kinds of inks is small, however, the fear of failing to detect the counterfeit using the same inks becomes greater. Also, when a printed matter whose counterfeit is undetectable is once circulated over a plurality of areas (countries and the like), the light source must be replaced with another light source emitting light at a different wavelength in order to detect it, which cannot achieve flexible responses.

The light source section 20d in the analyzing apparatus 1d, 1e according to the fourth embodiment generates SC light P2 having a flat spectrum in a near-infrared region. While changing (sweeping) the wavelength of the SC light P2 with the tunable filter 13, the printed matter A3 is irradiated with the irradiation light P3, and the light to be detected L is continuously captured according to the change in wavelength of the irradiation light P3, whereby a continuous characteristic in a wavelength region owned by the printed matter A3 can easily be obtained. Here, the continuous characteristic in the wavelength region is a characteristic peculiar to the printed matter A3 such as the spectral waveform of transmitted light or reflected light caused by the species of inks applied to the printed matter A3 or the pattern and the spectral waveform of transmitted or reflected light depending on a material (paper quality and the like) forming a base of the printed matter A3.

Therefore, unlike the conventional counterfeit detecting apparatus mentioned above, the first authenticity determining method makes it possible to specify materials for use, whereby a counterfeiter must match not only colors and patterns as conventional ones, but also all the colors of inks applied to the printed matter A3, materials of the inks, patterns, paper quality, and the like of the printed matter A3 totally with genuine ones, which makes it very difficult to counterfeit. Also, it is not necessary to apply a specific ink for determining the authenticity, whereby the authenticity can be determined even in an already issued printed matter. A single apparatus can determine whether various printed matters A3 are authentic or not. Even when a printed matter whose counterfeit is undetectable is circulated, such a counterfeit printed matter can instantaneously be dealt with by changing the value of wavelength sweeping intervals or wavelength of the irradiation light P3 by the tunable filter 13.

(Second Authenticity Determining Method)

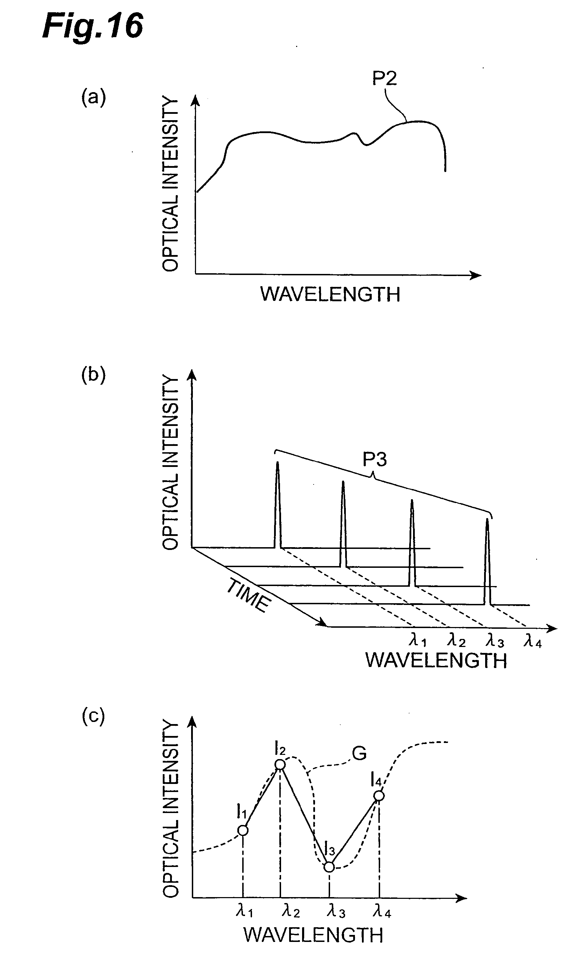

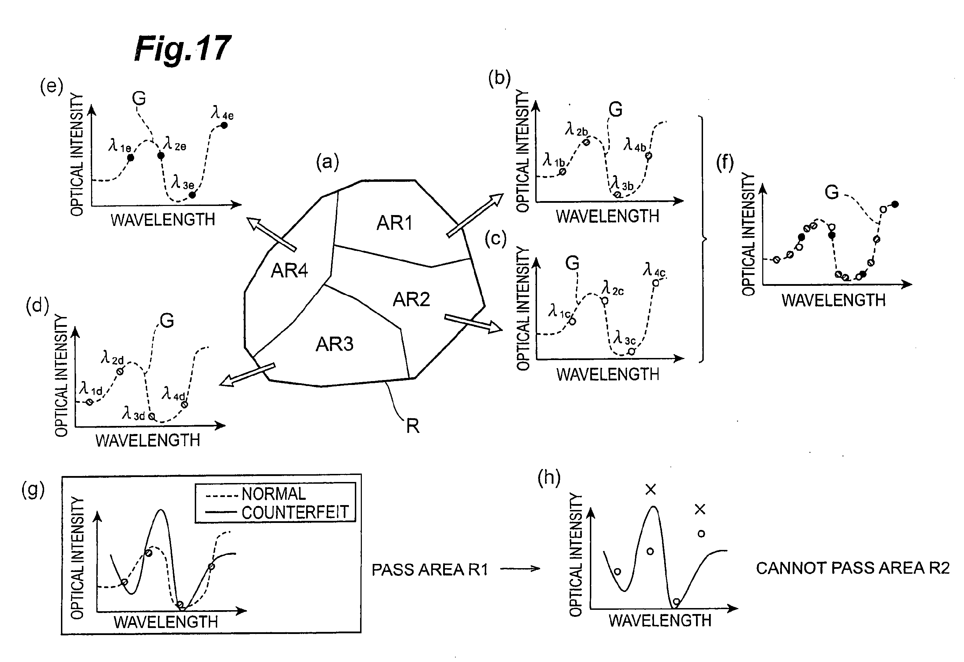

Figs. 16 and 17 are charts for explaining a second authenticity determining method. First, in the second authenticity determining method, laser light P1 is supplied to the optical fiber 9 in the light source section 20d, so as to generate SC light P2 having a flat spectrum over a wide range as in the spectrum shown in the area (a) of Fig. 16. Then, as shown in the area (b) of Fig. 16, the tunable filter 13 limits the wavelength of the irradiation light P3 to a first predetermined wavelength $\lambda_1$, and the printed matter A3 is irradiated with this irradiation light P3. Subsequently, the light to be detected L from the printed matter A3 caused by the irradiation light P3 is detected by the light-detecting section 3d (or light-detecting section 3e). As a result, an optical intensity $I_1$ of the light to be detected L corresponding to the wavelength $\lambda_1$ is detected as shown in the area (c) of Fig. 16.

Thereafter, the tunable filter 13 successively limits the wavelength of the irradiation light P3 to second to fourth predetermined wavelengths $\lambda_2$ to $\lambda_4$, and optical intensities $I_2$ to $I_4$ of the light to be detected L corresponding to the second to fourth predetermined wavelengths $\lambda_2$ to $\lambda_4$ are successively detected. This yields discrete optical intensity data as shown in the area (c) of Fig. 16, by which the authenticity can be determined. The graph G in the area (c) of Fig. 16 is a continuous spectral waveform caused by the species of ink, pattern, paper quality, and the like of the printed matter A3.

Further, as shown in the area (a) of Fig. 17, the second authenticity determining method divides a region R where the printed matter is circulated into a plurality of areas (e.g., four areas AR1 to AR4) and changes combinations of the predetermined wavelengths $\lambda_1$ to $\lambda_4$ allocated to the respective areas. In particular, wavelengths $\lambda_{1b}$ to $\lambda_{4b}$ are allocated to the area AR1 as the first to fourth predetermined wavelengths (the area (b) of Fig. 17), wavelengths $\lambda_{1c}$ to $\lambda_{4c}$ different from the wavelengths $\lambda_{1b}$ to $\lambda_{4b}$ are allocated to the area AR2 as the first to fourth predetermined wavelengths (the area (c) of Fig. 17), wavelengths $\lambda_{1d}$ to $\lambda_{4d}$ different from the wavelengths $\lambda_{1b}$ to $\lambda_{4b}$ and $\lambda_{1c}$ to $\lambda_{4c}$ are allocated to the area AR3 as the first to fourth predetermined wavelengths (the area (d) of Fig. 17), and wavelengths $\lambda_{1e}$ to $\lambda_{4e}$ different from the wavelengths $\lambda_{1b}$ to $\lambda_{4b}$, $\lambda_{1c}$ to $\lambda_{4c}$, and $\lambda_{1d}$ to $\lambda_{4d}$ are allocated to the area AR4 as the first to fourth predetermined wavelengths (the area (e) of Fig. 17).

Namely, when the optical intensity data in the areas A1 to A4 are combined together, a more detailed spectrum of the printed matter A3 is obtained (the area (f) of Fig. 17). Thus, in the second authenticity determining method, the discrete optical intensity data in the areas AR1 to AR4 are complementary to each other. This can construct a counterfeit detecting system which is simple with a high throughput in each of the areas AR1 to AR4, while more detailed information can be obtained by combining a plurality of areas. Therefore, the second authenticity determining method is advantageous in that it can construct a firm counterfeit detecting system as a whole. When a counterfeit printed matter is circulated in a certain area AR1, and intensities of the light to be detected L at predetermined wavelengths $\lambda_{1b}$ to $\lambda_{4b}$ allocated to this area AR1 happen to coincide with standards, the probability of intensities of the light to be detected L at predetermined wavelengths $\lambda_{1c}$ to $\lambda_{4c}$ allocated to another area (e.g., area AR2) also coinciding with standards will be very low, whereby the counterfeit can be detected in the area AR2. Therefore, the second authenticity determining method can enhance the probability of detecting a counterfeit printed matter, and can construct a firmer counterfeit prevention system. The second authenticity determining method also makes it easy to trace the process of circulating the counterfeit printed matter.

In the fourth embodiment, the signal processing section may successively perform a first step of determining a wavelength of emitted light, and a second step of irradiating an object with irradiation light having the wavelength determined in the first step and yielding a result of detection of a reflected component of the irradiation light. The first step, which is a step performed prior to irradiating the object with the irradiation light, irradiates the object with probe light having a wavelength region of 800 nm to 3000 nm, and determines the wavelength of the irradiation light emitted from the light source section according to the result of detection of a reflected component of the probe light. When the inspection wavelength of the object is determined beforehand, a filter for narrowing the SC light band or selectively removing an unnecessary wavelength component can be arranged on the light source section side or light-detecting section side. This structure enables spectrometry with a favorable SN ratio.

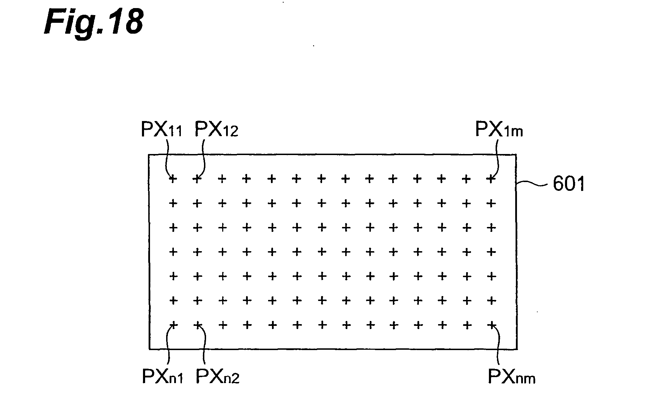

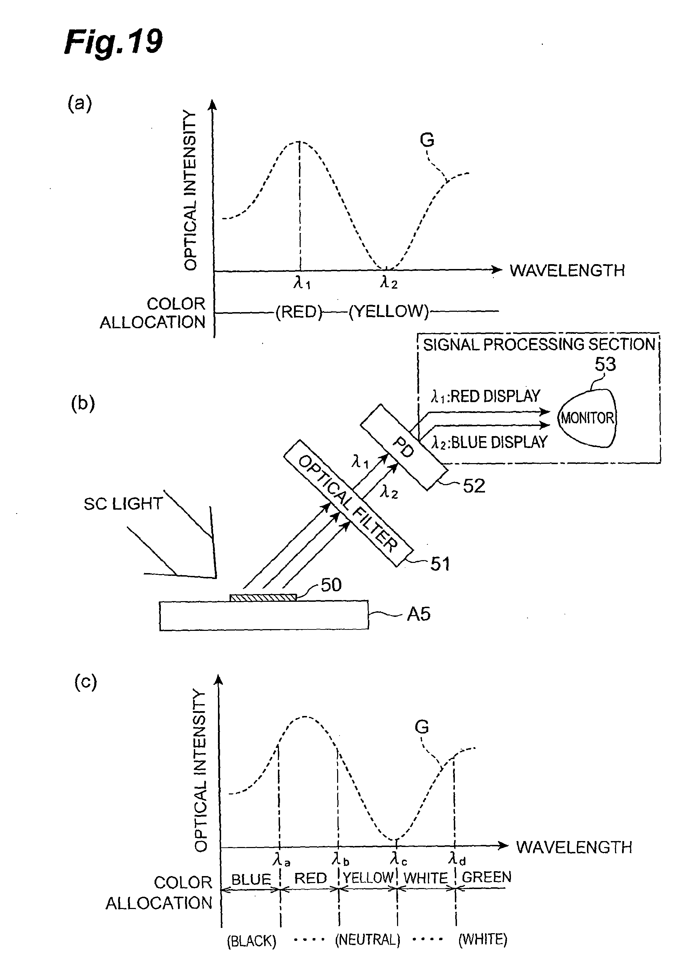

The analyzing apparatus according to the present invention may have a structure for turning the imaging data based on information about the light to be detected into a color image. Figs. 18 and 19 are diagrams for explaining color imaging in this analyzing apparatus.

The color imaging is performed in the signal processing section, for example, such that colors in the visible light band are allocated to pixels $PX_{11}$, ..., $PX_{nm}$ constituting the imaging data 601 (illumination image) as shown in Fig. 18, whereby an illumination area can be visualized more clearly.

For example, with respect to each of the pixels $PX_{11}$, ..., $PX_{nm}$ (see Fig. 18) constituting imaging data corresponding to respective illumination locations within the illumination area, the signal processing section allocates different colors in the visible light region to specific wavelengths $\lambda_1$, $\lambda_2$, respectively, as shown in the area (a) of Fig. 19. The allocated colors in the visible light region may be red, yellow, blue, and the like or expressed by densities in a monochromatic image. Then, as shown in the area (b) of Fig. 19, a monitor 53 displays the imaging data with the respective colors allocated by the signal processing section to the pixels $PX_{11}$, ..., $PX_{nm}$ constituting the imaging data, whereby the imaging data can be visualized according to the information about the light to be detected. In particular, as shown in the area (b) of Fig. 19, a ink 50 on an object A5 is irradiated with SC light, whereby emitted or reflected light from the ink 50 reaches an optical filter 51. The optical filter 51 is an optical component which selectively transmits the wavelength components $\lambda_1$, $\lambda_2$ therethrough, whereas a light-receiving device PD 52 detects the wavelength compo-

nents $\lambda_1$, $\lambda_2$ transmitted through the optical filter 51. Then, the generated imaging data is displayed on the monitor 53 with the respective colors allocated to the wavelength components $\lambda_1$, $\lambda_2$.

Visualization of other imaging data can also be realized by allocating different colors in the visible light region to respective wavelength bands dividing the band of light to be detected. For example, as shown in the area (c) of Fig. 19, the signal processing section allocates blue to the wavelength band of the wavelength $\lambda_a$ or shorter, red to the wavelength band of the wavelengths $\lambda_a$ to $\lambda_b$, yellow to the wavelength band of the wavelengths $\lambda_b$ to $\lambda_c$, white to the wavelength band of the wavelengths $\lambda_c$ to $\lambda_d$, and green to the wavelength band of the wavelength $\lambda_d$ or longer. The allocated colors in the visible light region may be red, yellow, blue, and the like or expressed by densities in a monochromatic image in this color imaging as well.

(Third Authenticity Determining Method)

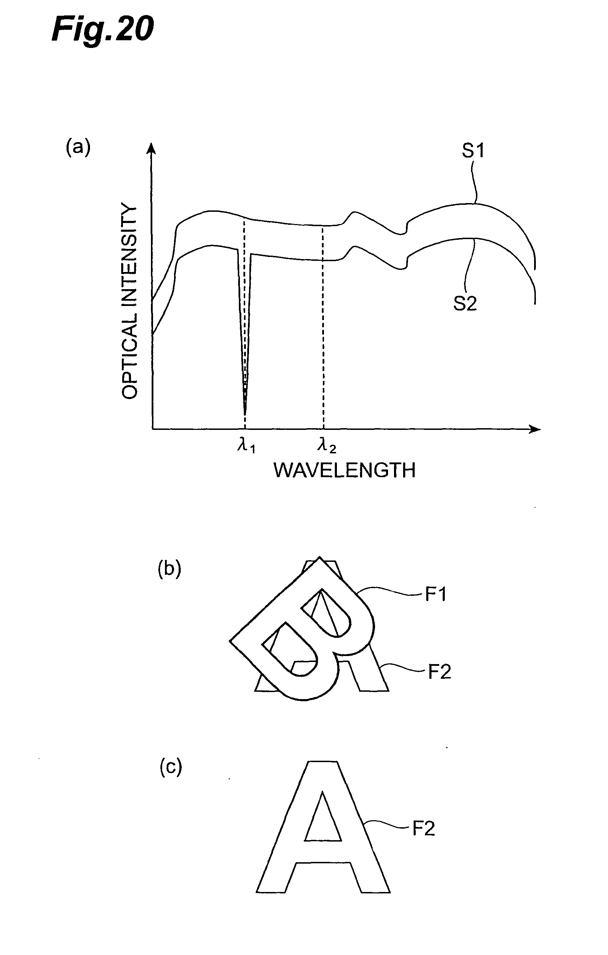

Fig. 20 is a diagram for explaining a third authenticity determining method. The third authenticity determining method determines whether a printed matter A3 printed with patterns (e.g., patterns F1, F2 shown in the area (b) of Fig. 20) by a plurality of kinds of inks different from each other in terms of absorption wavelength or the like is authentic or not. An analyzing apparatus executing the third authenticity determining method has an optical filter which attenuates a wavelength component corresponding to one or more wavelengths (e.g., wavelength $\lambda_1$) in the respective absorption wavelengths or the like of a plurality of kinds of inks in place of the tunable filter 13 shown in the areas (a) and (b) of Fig. 14.

As method (i) in the third authenticity determining method, laser light P1 is supplied from the light source section 20d to the optical fiber 9, whereby SC light P2 having a flat spectrum over a wide band as in the spectrum S 1 shown in the area (a) of Fig. 20 is generated within the optical fiber 9, and the printed matter A3 is irradiated with the SC light P2 as irradiation light P3. Then, the light to be detected L from the printed matter A3 is detected by the light-detecting section 3d (or light-detecting section 3e). As method (ii), the optical intensity of the component at the wavelength $\lambda_1$ in the irradiation light P3 is greatly attenuated (graph S2) by the optical filter, and the printed matter A3 is irradiated with the irradiation light P3. Then, the light to be detected L from the printed matter A3 is detected by the light-detecting section 3d (or light-detecting section 3e).

The areas (b) and (c) of Fig. 20 are examples of images obtained by the above-mentioned methods (i) and (ii). In the areas (b) and (c) of Fig. 20, pattern F 1 is a pattern by a ink whose pumping wavelength is wavelength $\lambda_1$, whereas pattern F2 is a pattern by a ink whose pumping wavelength is wavelength $\lambda_2$ different from the wavelength $\lambda_1$. In the above-mentioned method (i), the irradiation light P3 has a flat spectrum over a wide band as with the spectrum S 1 shown in the area (a) of Fig. 20, whereby imaging data obtained as the light to be detected L clearly displays both of the patterns F 1 and F2 (see the area (b) of Fig. 20). In the above-mentioned method (ii), by contrast, the spectrum of the irradiation light P3 is attenuated at the wavelength $\lambda_1$ as with the spectrum S2 shown in the area (a) of Fig. 20, whereby the imaging data obtained as the light to be detected L clearly displays only the pattern F2 (see the area (c) of Fig. 20).

Though the fourth embodiment uses two wavelengths $\lambda_1$, $\lambda_2$ in order to simplify the explanation, it is easy to set a plurality of wavelengths where the spectrum of irradiation light P3 is locally attenuated like the wavelength $\lambda_1$, since the SC light P2 has a flat spectrum over a wide band. Therefore, using a plurality of kinds of inks having respective absorption wavelengths or the like at the plurality of wavelengths makes it possible to detect counterfeits with a higher accuracy. Also, a plurality of inks having respective pumping wavelengths different from each other may be applied like a mosaic to the printed matter A3, such that a meaningful symbol or the like can be recognized and acquired as an image only when the plurality of kinds of inks emit light at the same time upon irradiation with the irradiation light P3. Here, a ink having a pumping wavelength at the wavelength $\lambda_1$ in the area (b) of Fig. 20 may be applied to the printed matter A3, so that acquired images differ between the cases irradiated with the irradiation light P3 having the spectrums S 1 and S2 shown in the area (a) of Fig. 20, respectively.

In the third authenticity determining method, a counterfeiter does not know which wavelength is an attenuated specific wavelength component used for detection, and is required to use all the inks and reproduce totally the same pattern, which makes the counterfeit hard to perform. By randomly applying a ink not used for detection to the printed matter A3, for example, this feature can make it harder for the counterfeiter to reproduce the printed matter. On the other hand, a person to determine the counterfeit can determine whether the printed matter A3 is authentic or not according to a clear image, and thus can efficiently determine the authenticity.

When a ink utilizing so-called upconversion containing erbium or the like, light to be detected L in the visible light region can be obtained upon irradiation with irradiation light P3 in the near-infrared region. Therefore, applying a plurality of kinds of such inks to the printed matter A3 makes it possible to obtain an image by a visual inspection, whereby a simpler authenticity determining system can be constructed.

(Fourth Authenticity Determining Method)

In a fourth authenticity determining method, a printed matter A3 coated with a plurality of inks different from each other in terms of pumping wavelength and fluorescence life is irradiated with SC light P2 as irradiation light P3, whereby whether it is authentic or not is determined. First, the light source section 20d supplies laser light P1 to the optical fiber 9, SC light P2 having a flat spectrum over a wide band is generated within the optical fiber 9, and the printed matter A3 is irradiated with this SC light P2 as the irradiation light P3.

Then, the light to be detected L (fluorescence) from the printed matter A3 is detected (captured) by the light-detecting section 3d (or light-detecting section 3e). Here, the light-detecting section 3d (or light-detecting section 3e) performs at least one detecting operation after the lapse of a predetermined time in response to one irradiating operation with the irradiation light P3 by the light source section 20d.

When determining the authenticity of the printed matter A3 coated with a plurality of kinds of inks different from each other in terms of pumping wavelength and fluorescence life, irradiating the printed matter A3 with the wideband SC light P2 can easily pump a plurality of inks at the same time. The fluorescence generated by this pumping is detected by the light-detecting section 3d (or light-detecting section 3e) after the lapse of a predetermined time from the irradiation with the irradiation light P3, whereby a time-resolved fluorescence intensity is obtained. When the printed matter A3 printed with a pattern by using inks having respective fluorescence lives of 1 $\mu$s and 10 $\mu$s is captured at least once during the time between 1 $\mu$s and 10 $\mu$s while using the fluorescence of irradiation light P3 in the light source section 20d as a trigger, the fluorescence from the ink having the fluorescence life of 10 $\mu$s can be detected alone without capturing the fluorescence from the ink having the fluorescence life of 1 $\mu$s. When images are captured twice, for example, after lapses of 0.5 $\mu$s and 5 $\mu$s while using the fluorescence of irradiation light P3 in the light source section 20d as a trigger, images different from each other can be obtained in the first and second capturing operations, whereby characteristics of the printed matter A3 can be attained more accurately. Therefore, the fourth authenticity determining method can accurately determine whether the printed matter A3 is authentic or not.

Realizing the fourth authenticity determining method by the analyzing apparatus 1d (or analyzing apparatus 1e) can pump the above-mentioned plurality of inks over a longer and wider frequency region, whereby the authenticity determination can be performed more accurately. Though the fourth authenticity determining method can also be performed by using a plurality of single-wavelength pulse light sources, a structure which emits light pulses of a number of single-wavelength pulse light sources (mainly laser light sources) in synchronization with each other becomes complicated and bulky. By contrast, using the analyzing apparatus 1d (or analyzing apparatus 1e) can yield a plurality of wavelengths of irradiation light P3 whose irradiation timings are completely in synchronization with each other in a simple structure.

(Fifth Embodiment)

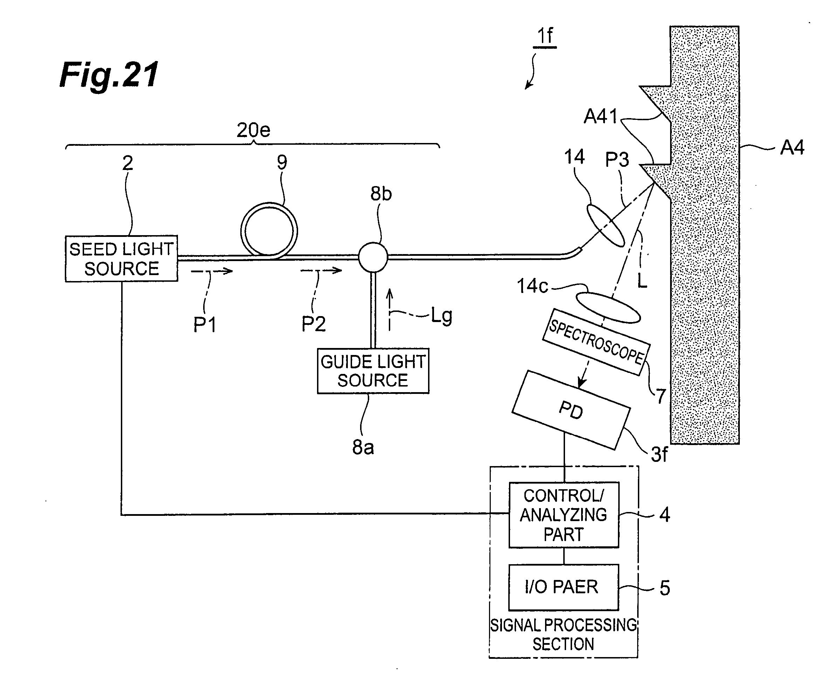

Fig. 21 is a diagram showing the structure of a fifth embodiment of the analyzing apparatus according to the present invention. The analyzing apparatus 1f according to the fifth embodiment is a modified example of the analyzing apparatus 1 according to the first embodiment, and is an apparatus for detecting the deterioration of concrete A4 in a building or the like. As shown in Fig. 21, the analyzing apparatus 1f according to the fifth embodiment comprises a light-detecting section 3f, a control/analyzing part 4, an I/O part 5, a spectroscope 7, a lens 14, and a light source section 20e. The control/analyzing part 4 and I/O part 5 constitute a signal processing section. Among them, the structures of the control/analyzing part 4 and I/O part 5 are the same as those in the first embodiment (Fig. 1), whereas the structure of the spectroscope 7 is the same as that in the third embodiment (the area (a) of Fig. 12). The fifth embodiment may have a tunable filter in place of the spectroscope 7 as in the first embodiment.

The light source section 20e is a light-emitting unit for irradiating the concrete A4 with irradiation light P3 based on SC light P2 including SC light. The light source section 20e is constituted by a seed light source 2 which emits laser light P1, an optical fiber 9 which is a solid HNLF inputting laser light P1 and emitting the SC light P2, a guide light source 8a which generates guide light Lg for illuminating an analysis location in the concrete A4, and an optical coupler 8b for combining the guide light source 8a with the SC light P2. The light source section 20e irradiates the concrete A4 with the SC light P2 and guide light source 8a as irradiation light P3. Detailed structures of the seed light source 2 and optical fiber 9 are the same as those in the first embodiment.

The lens 14 is an irradiation diameter restricting part for restricting the irradiation area of the irradiation light P3 on the surface of the concrete A4 into a spot, and is optically connected to the light exit end of the light source section 20b. As with the condenser lens 14b in the above-mentioned second embodiment, the lens 14 turns the irradiation diameter of the irradiation light P3 on the surface of the object A2 into a spot of 1 $\mu$m or more but 50 mm or less in order to enhance the optical intensity (illuminance) of the irradiation light P3 per unit area.

The light-detecting section 3f detects the light to be detected L from the concrete A4 caused by the irradiation light P3. The light-detecting section 3 f according to the fifth embodiment is constituted by a light-receiving device such as PD, receives reflected/scattered light from the concrete A4 as the light to be detected L, and converts its optical intensity into an electric quantity such as current. A lens 14c is a lens for efficiently converging the light to be detected onto the light-detecting section 3f, and is preferably used when the reflected/scattered light from the concrete is weak, for example.

An example of concrete deterioration detecting method utilizing the analyzing apparatus 1f will now be explained.

(Concrete Deterioration Detecting Method)

This deterioration detecting method irradiates the concrete A4 with SC light P2 which is wideband near-infrared light, detects reflected/scattered light to be detected L, and compares the spectrum of the light to be detected L and the spectrum of the SC light P2 with each other, thereby noninvasively detecting a chemical deterioration of the concrete A4.

Here, deteriorations of concrete will be explained. Three causes, i.e., (1) neutralization, (2) salt damage, and (3) sulfate deterioration, have mainly been known as those by which concrete deteriorates. The neutralization in (1) is a deterioration in which calcium hydroxide $Ca(OH)_2$ and carbon dioxide (carbonic acid $H_2CO_3$) react with each other, thereby losing the alkalinity of concrete. The salt damage in (2) is a deterioration in which salt attaches to the concrete surface, whereby chloride ions infiltrate thereinto. The sulfate deterioration in (3) is a deterioration in which acid rain or the like causes sulfate ion $SO_4^{2-}$ to react with calcium hydroxide $Ca(OH)_2$, thereby eluting the latter.

In the respective deteriorating processes of the above-mentioned causes of deterioration (1) to (3), substances different from each other are newly generated by chemical reactions. Therefore, the absorption spectrum of the concrete changes near the absorption wavelengths of thus newly generated substances. For example, the absorptance in the vicinity of 1.35 $\mu$m to 1.45 $\mu$m mainly changes in the neutralization, the absorptance in the vicinity of 2.2 $\mu$m to 2.3 $\mu$m mainly changes in the salt damage, and the absorptance in the vicinity of 1.7 $\mu$m to 1.8 $\mu$m mainly changes in the sulfate deterioration. However, the value of absorptance itself varies greatly, so that the degree of deterioration is hard to determine by comparing the absorptances of specific wavelengths alone. Therefore, the degree of deterioration can accurately be determined when a wavelength region covering shorter and longer sides of a wavelength where the absorptance changes is widely measured, and the resulting spectra of irradiation light P3 and light to be measured L are compared with each other. When the analyzing apparatus 1f according to the fifth embodiment is used, the SC light P2 has a flat spectrum over a wide band, so that all the wavelengths mentioned above can be measured at once, whereby the spectra can easily be compared with each other. The SC light P2 is wideband light having a high coherency, and thus can illuminate a specific position in a remote location with a high accuracy when collimated. Therefore, a high position of a building can easily be measured remotely from the ground, for example.

Thus, when the analyzing apparatus 1f according to the fifth embodiment is used for detecting the deterioration of concrete, the optical absorption of the concrete can be measured over a wider frequency region in a longer time, whereby the deterioration can be detected with a high accuracy in a simple structure. It is also excellent in reliability and practicality, since the solid optical fiber 9 such as HNLF is used as the light source for the SC light P2. The wavelength regions to be detected differ depending on the components of concrete A4 and thus are not limited to those mentioned above.

Examples of methods of comparing changes in spectra include not only the method comparing the spectra of irradiation light P3 and light to be detected L with each other, but also various methods such as a method comparing the spectrum of light to be detected L before the deterioration and the spectrum of light to be detected L after the deterioration with each other, a method pulsating the SC light P2 and measuring the time response of the pulse light source, and a method referring to a database concerning spectra of absorption, reflection, and the like of light to be detected prepared for each component of the concrete A4 and extracting causes of the deterioration of concrete according to changes in spectral forms.

Scanning the concrete A4 with the irradiation position or light-detecting section 3f makes it possible to find deteriorated positions of the concrete A4. The deteriorated positions of the concrete A4 can also be found when a two-dimensional image pickup device such as infrared camera is employed as the light-detecting section 3 so that the optical intensity of the light to be detected L is obtained two-dimensionally. In these cases, the deteriorated positions can be found more accurately by the lens 14 narrowing the irradiation diameter of the irradiation light P3. Observing temporal changes in the spectral intensity of light to be detected L makes it possible to measure the state of deterioration of the concrete A4 in the thickness direction thereof.

As shown in Fig. 21, projections A41 provided on the surface of the concrete A4 may be irradiated with the irradiation light P3. Consequently, the light to be detected L can efficiently be detected. When laser light in the visible region with a favorable visibility is combined as the guide light Lg with the optical fiber, so as to yield the irradiation light P3, measurement locations of the concrete A4 at a remote place can also be specified. In this case, the object to be measured can accurately be irradiated with the irradiation light P3.

When the reflectance fluctuates because of stains on the surface of the concrete A4 and the like, the value of reflectance obtained from the spectrum of the light to be detected L may be differentiated. In this case, even when the reflectance is low, a wavelength band where the reflection spectrum changes, which occurs as the concrete A4 deteriorates, can be specified, whereby the deterioration can accurately be detected regardless of the surface state of the concrete A4. Though efficiency is lowered by optical scattering when the surface of the concrete A4 has irregularities and the like, the beam diameter of the irradiation light P3 may be increased, so as to average the reflectance in the measurement area, and so forth. In these cases, specific wavelength components used for differentiation may be detected alone in the light to be detected L in the light-detecting section 3f.

As in the foregoing, the analyzing apparatus, authenticity determining apparatus, authenticity determining method, and underground searching method according to the present invention can be modified in various ways without being restricted to the above-mentioned embodiments. For example, the analyzing apparatus according to the present invention is not limited to the uses exemplified in the explanations of the above-mentioned embodiments (drug inspection, food inspection, and the like), but may be employed in various other uses requiring a wideband light source having a relatively long wavelength of 0.8 $\mu$m or more.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Industrial Applicability**

The analyzing apparatus according to the present invention can be employed in various spectrometers using wideband SC light sources.

**Claims**

1. An analyzing apparatus comprising:

   a light source section emitting supercontinuum light having expanded a spectrum band as irradiation light emitted to a predetermined object, said light source section including a seed light source emitting laser light, and a solid optical fiber generating the supercontinuum light in response to the input of laser light; and
   a light-detecting section detecting light to be detected from the object irradiated with the irradiation light,
   wherein the laser light emitted from said seed light source has a center wavelength within the range of 1.3 $\mu$m to 1.8 $\mu$m.

2. An analyzing apparatus according to claim 1, wherein said optical fiber includes a highly nonlinear optical fiber.

3. An analyzing apparatus according to claim 1 or 2, wherein the supercontinuum light has a spectrum band within the range of 0.8 $\mu$m to 3 $\mu$m.

4. An analyzing apparatus according to any one of claims 1 to 3, further comprising an irradiation diameter restricting part for restricting an irradiation diameter of irradiation light emitted from said light source section such that the irradiation light becomes a spot within the irradiation diameter range of 1 $\mu$m to 50 mm on a surface of the object.

5. An analyzing apparatus according to any one of claims 1 to 5, further comprising a signal processing section generating, in accordance with a result of detection in the light-detecting section, at least one of spectral waveform information and temporal waveform information concerning the light to be detected as imaging data including the object in an illumination area where the irradiation light reaches.

6. An analyzing apparatus according to claim 5, wherein said signal processing section allocates respective colors in a visible light region to one or more wavelength components included in the light to be detected with respect to pixels constituting the imaging data corresponding to illumination locations within the illumination area, and causes a predetermined display apparatus to show the pixels constituting the imaging data with the respective allocated colors.

7. An analyzing apparatus according to claim 5, wherein said signal processing section divides the wavelength range of the light to be detected into a plurality of wavelength regions with respect to pixels constituting the imaging data corresponding to illumination locations within the illumination area, allocates respective colors in a visible light region to the divided plurality of wavelength regions, and causes a predetermined display apparatus to show the pixels constituting the imaging data with the respective allocated colors.

8. An analyzing apparatus according to any one of claims 1 to 7, wherein said light-detecting section includes a light-receiving device containing an InP semiconductor layer and an InGaAs semiconductor layer.

9. An analyzing apparatus according to any one of claims 1 to 8, further comprising an optical filter for limiting at least one of a wavelength range of the irradiation light emitted to the object and a wavelength range of the light to be detected incident on said light-detecting section into a predetermined range.

10. An analyzing apparatus according any to one of claims 1 to 8, further comprising a tunable filter for limiting at least one of a wavelength range of the irradiation light emitted to the object and a wavelength range of the light to be detected incident on said light-detecting section.

11. An analyzing apparatus according to any one of claims 1 to 10, wherein the irradiation light has a spectral waveform adapted to compensate for a wavelength dependency of a light-receiving sensitivity of said light-detecting section.

12. An analyzing apparatus according to any one of claims 1 to 11, wherein said light source section has a plurality of exit ends for emitting the irradiation light.

13. An analyzing apparatus according to claim 5, wherein, for improving the SN ratio of the generated imaging data, said signal processing section produces corrected imaging data having reduced a noise component from the imaging data.

14. An analyzing apparatus according to claim 5, wherein said signal processing section performs:

   a first step, carried out prior to irradiating the object with the irradiation light, of irradiating the object with probe light having a wavelength region of 800 nm to 3000 nm, and determining the wavelength of the irradiation light emitted from said light source section in accordance with a result of detection of a reflected component of the probe light; and
   a second step of irradiating the object with irradiation light having the wavelength determined by the first step, thereby obtaining a result of detection of a reflected component of the irradiation light.

15. An analyzing apparatus according to claim 5, wherein said signal processing section averages pixels corresponding to a plurality of imaging data items successively generated as time passes, thereby newly producing an analysis image.

16. An authenticity determining apparatus for determining the authenticity of a printed matter having a pattern printed with a plurality of kinds of inks having optical characteristics different from each other in terms of at least one of absorption wavelength, reflection wavelength, and fluorescence wavelength, said apparatus comprising:

   a light source section emitting supercontinuum light having expanded a spectrum band as irradiation light emitted to the printed matter, said light source section including a seed light source emitting laser light, and a solid optical fiber generating the supercontinuum light in response to the input of the laser light; and
   a light-detecting section detecting light to be detected from the printed matter irradiated with the irradiation light,
wherein the laser light emitted from said seed light source has a center wavelength within the range of 1.3 $\mu$m to 1.8 $\mu$m.

17. An authenticity determining apparatus according to claim 16, further comprising an optical filter optically connected to said optical fiber, said optical filter attenuating or blocking a wavelength component of the irradiation light coinciding with at least one of absorption wavelength, reflection wavelength, and fluorescence wavelength of each of the plurality of kinds of inks.

18. An authenticity determining apparatus for determining the authenticity of a printed matter coated with a plurality of kinds of inks different from each other in terms of fluorescence wavelength and fluorescence life, said apparatus comprising:

   a light source section emitting supercontinuum light having expanded a spectrum band as irradiation light emitted to the printed matter, said light source section including a seed light source emitting laser light, and a solid optical fiber generating the supercontinuum light in response to the input of the laser light; and
   a light-detecting section detecting light to be detected generated when the plurality of kinds of inks are pumped with the irradiation light,
   wherein the laser light emitted from said seed light source has a center wavelength within the range of 1.3 $\mu$m to 1.8 $\mu$m, and
   wherein said light-detecting section detects light emitted from the printed matter in synchronization with a fluorescence of the irradiation light from said light source section.

19. An authenticity determining method for determining the authenticity of a printed matter, said method comprising:

   an irradiation step of making laser light incident on a solid optical fiber, so as to generate supercontinuum light within said solid optical fiber, and irradiating the printed matter with the supercontinuum light as irradiation light;
   a detection step of detecting light to be detected from the printed matter irradiated with the irradiation light; and
   a determination step of using one of wavelength components included in the light to be detected as a determination reference wavelength, and determining whether the printed matter is authentic or not in accordance with an optical intensity of the determination reference wavelength,

wherein said determination step divides a region where the authenticity of the printed matter is determined into a plurality of areas, and allocates determination reference wavelengths different from each other to thus divided areas, respectively.

20. An underground searching step for searching for a specific substance underground, said method comprising:

a drilling step of drilling underground;

an irradiation step of making laser light incident on a solid optical fiber, so as to generate supercontinuum light within said solid optical fiber, and emitting the supercontinuum light as irradiation light to a predetermined location within an area of the drilling;

a detection step of detecting light to be detected from the predetermined location irradiated with the irradiation light; and

a determination step of determining whether the specific substance exists or not in accordance with an intensity of a specific wavelength component included in the light to be detected.

**Fig.1**

(a)

(b)

EP 1 959 250 A1

# *Fig.2*

(a)

(b)

(c)

# Fig.3

## Fig.4

# Fig.5

EP 1 959 250 A1

Fig.6

(a)

(b)

# Fig.7

(a)

(b)

*Fig.8*

| | | SPECTRUM BAND (nm) | | | |
|---|---|---|---|---|---|
| | | 800~3000 | 1100~2400 | 1350~1650 | 1300~1800 |
| OPTICAL FIBER | ZERO-DISPERSION WAVELENGTH (nm) | 1350 | 1520 | 1600 | 1530 |
| | NONLINEAR COEFFICIENT (/W/km) | 22 | 20 | 25 | 30 |
| | LENGTH (m) | 0.3 | 10 | 15 | 300 |
| SEED LIGHT SOURCE (PULSE LASER) | REPETITION FREQUENCY (MHz) | 50 | 75 | 75 | 1000 |
| | AVERAGE POWER (mW) | 100 | 100 | 100 | 400 |
| | PULSE WIDTH (fs) | 90 | 200 | 200 | 500 |
| | CENTER WAVELENGTH (nm) | 1540 | 1555 | 1500 | 1535 |

# *Fig.9*

| | SPECTRUM BAND (nm) | | | |
|---|---|---|---|---|
| | 800~3000 | 1100~2400 | 1350~1650 | 1300~1800 |
| TIME-AVERAGED OPTICAL INTENSITY IN EACH BAND AS A WHOLE (mW) | 50 | 50 | 50 | 210 |
| 20 ($\mu$W/nm) | 20 | 40 | 150 | 520 |

# Fig.10

EP 1 959 250 A1

## Fig.11

(a)

(b)

(c)

## Fig.12

(a)

(b)

EP 1 959 250 A1

# Fig.13

(a)

(b)

**Fig.14**

(a)

SEED LIGHT SOURCE — 2

P1 → P2 → 13 — 19 — P3

9

20d

IR CAMERA — 3d

L — 6b

MONITOR/ANALYZING PART (SIGNAL PROCESSING SECTION)

1d

A3

(b)

20d

SEED LIGHT SOURCE — 2

9 — 13

P1 → P2 →

14 — P3

A3 — 6b

L — 3e

IR CAMERA

MONITOR/ANALYZING PART (SIGNAL PROCESSING SECTION)

1e

EP 1 959 250 A1

# Fig.15

# Fig.16

(a)

(b)

(c)

## Fig.17

(e) OPTICAL INTENSITY / WAVELENGTH
G
$\lambda_{1e}$ $\lambda_{2e}$ $\lambda_{3e}$ $\lambda_{4e}$

(a)
AR1
AR4
AR2
AR3
R

(b) OPTICAL INTENSITY / WAVELENGTH
G
$\lambda_{2b}$ $\lambda_{1b}$ $\lambda_{4b}$ $\lambda_{3b}$

(c) OPTICAL INTENSITY / WAVELENGTH
G
$\lambda_{1c}$ $\lambda_{2c}$ $\lambda_{4c}$ $\lambda_{3c}$

(d) OPTICAL INTENSITY / WAVELENGTH
G
$\lambda_{2d}$ $\lambda_{1d}$ $\lambda_{3d}$ $\lambda_{4d}$

(f) OPTICAL INTENSITY / WAVELENGTH
G

(g) OPTICAL INTENSITY / WAVELENGTH
- - - NORMAL
—— COUNTERFEIT

PASS AREA R1 ⟶

(h) OPTICAL INTENSITY / WAVELENGTH
×      ×

CANNOT PASS AREA R2

EP 1 959 250 A1

*Fig.18*

PX₁₁  PX₁₂                                    PX₁ₘ

PXₙ₁  PXₙ₂                                    PXₙₘ

## Fig.19

(a)

(b)

(c)

*Fig.20*

(a)

(b)

(c)

# Fig.21

SEED LIGHT SOURCE

GUIDE LIGHT SOURCE

SPECTROSCOPE

PD

CONTROL/ ANALYZING PART

I/O PAER

SIGNAL PROCESSING SECTION

EP 1 959 250 A1

<div align="center">

**INTERNATIONAL SEARCH REPORT**

</div>

| | International application No. |
|---|---|
| | PCT/JP2007/050815 |

**A. CLASSIFICATION OF SUBJECT MATTER**
*G01N21/35*(2006.01)i

According to International Patent Classification (IPC) or to both national classification and IPC

**B. FIELDS SEARCHED**

Minimum documentation searched (classification system followed by classification symbols)
G01N21/35

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JSTPlus(JDream2)

**C. DOCUMENTS CONSIDERED TO BE RELEVANT**

| Category* | Citation of document, with indication, where appropriate, of the relevant passages | Relevant to claim No. |
|---|---|---|
| Y | B.R.Washburn, et al., "Phase-locked, erbium-fiber-laser-basedfrequency comb in the near infrared", OPTICS LETTERS, Vol.29, No.3, 01 February, 2004 (01.02.04), pp.250-252 | 1-15 |
| Y | JP 2005-534428 A (INFRAREDX INC), 17 November, 2005 (17.11.05), Fig. 1; Par. Nos. [0086], [0090], [0118] | 1-15 |
| Y | JP 10-332533 A (Uniopt Co., Ltd.), 18 December, 1998 (18.12.98), Par. No. [0074] | 5-7 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 April, 2007 (09.04.07) | 24 April, 2007 (24.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/050815

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-279178 A  (Omron Corp.),<br>07 October, 2004 (07.10.04),<br>Par. No. [0040] | 13,15 |
| Y | JP 2003-520942 A  (ABBOTT LABORATORIES),<br>08 July, 2003 (08.07.03),<br>Par. No. [0137] | 14 |

Form PCT/ISA/210 (continuation of second sheet) (April 2005)

**INTERNATIONAL SEARCH REPORT**
Information on patent family members

International application No.

PCT/JP2007/050815

| | | | |
|---|---|---|---|
| JP 2005-534428 A | 2005.11.17 | AU 2003256954 A1 | 2004.02.23 |
| | | AU 2003258062 A1 | 2004.02.23 |
| | | AU 2003258062 A8 | 2004.02.23 |
| | | EP 1538968 A1 | 2005.06.15 |
| | | EP 1551299 A2 | 2005.07.13 |
| | | JP 2005-534415 A | 2005.11.17 |
| | | US 2004/024298 A1 | 2004.02.05 |
| | | US 2004/024321 A1 | 2004.02.05 |
| | | US 2004/077950 A1 | 2004.04.22 |
| | | WO 2004/012586 A2 | 2004.02.12 |
| | | WO 2004/012586 A3 | 2004.04.29 |
| | | WO 2004/012594 A1 | 2004.02.12 |
| | | WO 2004/012594 B1 | 2004.03.25 |
| JP 10-332533 A | 1998.12.18 | (Family: none) | |
| JP 2004-279178 A | 2004.10.07 | KR 20040081341 A | 2004.09.21 |
| | | US 2004/223165 A1 | 2004.11.11 |
| JP 2003-520942 A | 2003.07.08 | CA 2341538 A1 | 2000.03.09 |
| | | EP 1110075 A2 | 2001.06.27 |
| | | US 6087182 A | 2000.07.11 |
| | | US 6365109 B1 | 2002.04.02 |
| | | US 6426045 B1 | 2002.07.30 |
| | | US 6773922 B2 | 2004.08.10 |
| | | US 2003/048432 A1 | 2003.03.13 |
| | | US 2004/197927 A1 | 2004.10.07 |
| | | WO 00/13002 A2 | 2000.03.09 |
| | | WO 00/13002 A3 | 2001.02.22 |

Form PCT/ISA/210 (patent family annex) (April 2005)

50

<table>
<tr><td>**INTERNATIONAL SEARCH REPORT**</td><td>International application No.<br>PCT/JP2007/050815</td></tr>
</table>

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
(1)  The inventions of claims 1-15 relate to an analyzer.
(2)  The inventions of claims 16-19 relate to authenticity judgment.
(3)  The invention of claims 20 relates to an underground searching method .

Since there is no technical relationship among those inventions involving one or more of the same or corresponding special technical features, they are not considered to be so linked as to form a single general inventive concept.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-15

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003279412 A
- JP 2005312743 A
- JP HEI5266318 B
- JP 2001518208 W

**Non-patent literature cited in the description**

- **OCHIAI.** Near-Infrared Chemical Imaging: Technology and Applications. *Journal of the Spectroscopical Society of Japan,* 2004, vol. 53 (6), 377
- **IWATA.** Femtosecond Time-Resolved Near-Infrared Spectroscopy and 'Loosely Bound Electrons. *Journal of the Spectroscopical Society of Japan,* 2005, vol. 54 (3), 153